(19)

Europäisches Patentamt
European Patent Office
Office européen des brevets

(11)  **EP 3 089 003 A1**

(12)  # EUROPEAN PATENT APPLICATION
published in accordance with Art. 153(4) EPC

(43) Date of publication:
**02.11.2016 Bulletin 2016/44**

(51) Int Cl.:
***G06F 3/041*** *(2006.01)*

(21) Application number: **15878310.0**

(22) Date of filing: **05.01.2015**

(86) International application number:
**PCT/JP2015/050072**

(87) International publication number:
**WO 2015/099200 (02.07.2015 Gazette 2015/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **27.12.2013 JP 2013273372**

(71) Applicant: **Yoshida, Kenji**
**Bunkyo-ku**
**Tokyo 112-0002 (JP)**

(72) Inventor: **Yoshida, Kenji**
**Bunkyo-ku**
**Tokyo 112-0002 (JP)**

(74) Representative: **Klunker . Schmitt-Nilson . Hirsch**
**Patentanwälte**
**Destouchesstraße 68**
**80796 München (DE)**

(54)  **INFORMATION INPUT ASSISTANCE SHEET**

(57)    The objective of the invention is to provide an information input assistance sheet that can accurately read infrared reflection light from an ultra minute area regardless of the contact angle of the optical reading device when the optical reading device reads a dot pattern by causing infrared light emitted from the light source of the optical reading device to be reflected off the information input assistance sheet printed with dots that absorb infrared light. The dots of the dot pattern are printed with an ink that has a chacteristic that absorbs at least a predetermined wavelength light or the characteristic that absorbs the predetermined wavelength light and a visible light transmission characteristic, and the diffuse reflection layer is formed by arranging a directional reflection material so that the predetermined wavelength light that is irradiated by the irradiation means is diffusely reflected toward the dot pattern reading surface.

Fig. 1A

Fig. 1B

**Description**

FIELD OF THE INVENTION

The present invention relates to an information input assistance sheet for reading a printed dot pattern, in particular, relating to an information input assistance sheet for reading a dot pattern printed on a minute area.

BACKGROUND OF THE INVENTION

Computers are recently increasingly mounting a touch panel function on a display device as a standard feature. In some computers, to add a touch panel function to a display device which is not equipped with a touch panel function, a film printed with a dot pattern that signifies coordinate information for enabling reading means to input coordinates may be attached to the front of or ahead of the display device (for example, refer to Patent Literature 1)

The Applicant has been granted patent rights of an information input sheet that includes an infrared reflection layer having characteristics of reflecting infrared light and transmitting visible light and a dot pattern layer having dots formed of an infrared absorption material arranged thereon (for example, refer to Patent Literature 2).

As for the reflection layer, a projection screen that contains 50% or more spiral axis structure area in a polarized light selective reflection layer is known. In the spiral axis structure area, the angle between the spiral axis of the spiral axis structure and the normal line of the substrate plane is made in the range of 0 to 45 degrees by varying containment of leveling agent in a coating liquid for forming a polarized light selective reflection layer, thereby injecting leveling agent inside the polarized light selective reflection layer, thus, influencing the configuration of the cholesteric liquid crystal structure domain at a molecular level (for example, refer to Patent Literature 3).

PRIOR ART LITERATURE

PATENT LITERATURE

Patent Literature 1: Unexamined Japanese Patent Application Publication No. 2003-256137

Patent Literature 2: The publication of Japanese Patent No. 4129841

Patent Literature 3: Unexamined Japanese Patent Application Publication No. 2005-37735

SUMMARY OF THE INVENTION

PROBLEMS THAT THE INVENTION IS TO SOLVE

However, Patent Literature 1 discloses only the idea of the film, yet, does not describe means for realizing the film.

Figs. 24A and 24B are diagrams illustrating a conventional grid sheet described in Patent Literature 2. As in Figs. 24A and 24B, for example, if IR-LEDs as optical reading devices are provided at two positions with a lens in-between and infrared light irradiated from the IR-LEDs is specularly reflected off the infrared reflection layer in a manner in which angles of the incident light and reflection light with respect to a normal line direction of the grid sheet become the same, the lens provided in the middle of the two IR-LEDs cannot receive the central portion of the reflection light of the infrared light irradiated from the IR-LEDs.

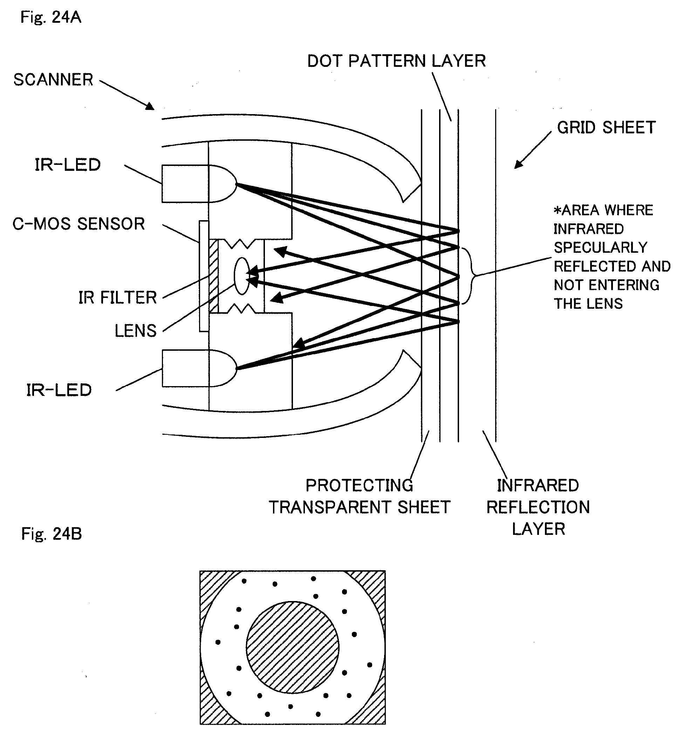

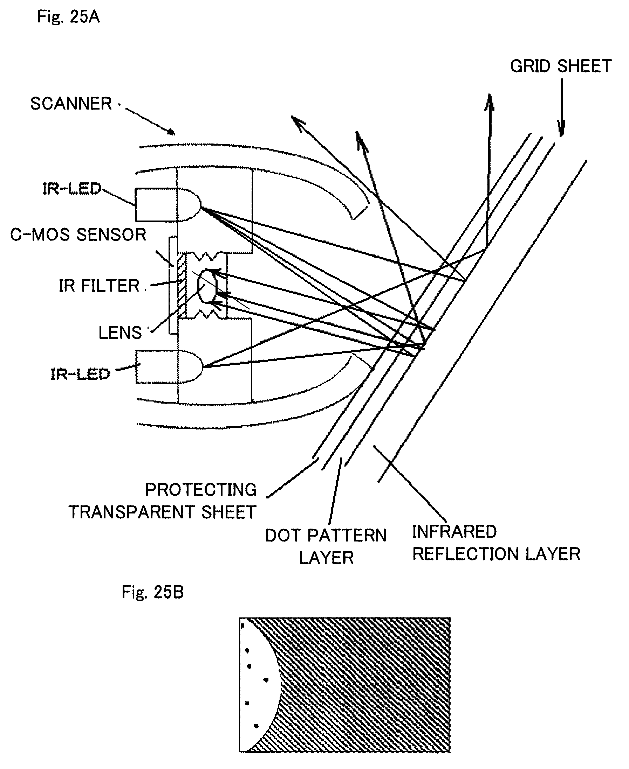

While Figs. 24A and 24B illustrate an example of use of the scanner standing perpendicular to the grid sheet, the scanner is often used with inclination of 30 to 40 degrees out of perpendicular to the grid sheet. Figs. 25A and 25B are diagrams illustrating a conventional grid sheet when the scanner is used with inclination, which arises a problem where only part of reflection light of infrared light irradiated from the IR-LEDs can be received by specular reflection of the grid sheet.

While Patent Literature 2 indicates that an infrared diffusion layer is provided between an infrared reflection layer and a dot pattern layer, it does not specifically describe the infrared reflection layer. In Patent Literature 2, the diameter of the opening of the optical reading device illustrated in Figs. 24A to 25B is about 4 mm, within which about 60 dots, each of the size of about 50 $\mu$m, are printed with intervals of about 508 $\mu$m. Thus, the optical reading device of the dot pattern is required to have the ability to identify infrared reflection light with high precision.

Patent Literature 3 claims favorable diffusibility and visibility for a projection screen which contains 50 percent or more spiral axis structure area where angles between the spiral axes of the spiral axis structure area and the normal line of the substrate plane are in the range from 0 to 45 degrees. However, nanometer level visibility in a super minute area of micrometer level is not assured.

Further, in Patent Literature 3, with 50 percent or more containment of spiral axis structure area where the angles between the normal line and the spiral axes are in the range of 0 to 45 degrees, reflection light, of which angle with the normal line of the substrate plane of the projection screen is in the range within 0 to 45 degrees, is collected. Thus, when a contact angle with the grid sheet with respect to the normal line of the projection screen is more than 45 degrees as shown in Fig. 25A, the light reception amount of reflection light decreases, which makes it hard to read the dot patterns.

Thus, the objective of the present invention is to provide an information input assistance sheet having an infrared diffuse reflection layer that is formed of a material that makes it possible to read infrared reflection light reflected from an ultra minute area, regardless of the contact angle of the optical reading device with the ultra minute area, when the optical reading device reads a dot pattern by causing infrared light emitted from the light source of the optical reading device to be reflected off the information input assistance sheet printed with dots that absorb infrared light.

MEANS FOR SOLVING THE PROBLEMS

(1) An information input assistance sheet of the present invention comprises a diffuse reflection layer that diffusely reflects at least light of a predetermined wavelength and is formed on a dot pattern reading surface, on which is formed a dot pattern that is read in or out of contact by an optical reading device, or an opposite surface of the dot pattern reading surface, the information input assistance sheet being placed on or adhered to a predetermined medium surface or near the medium surface, the optical reading device comprising: irradiation means that irradiates the light of the predetermined wavelength; a filter that transmits at least the light of the predetermined wavelength and blocks visible light; imaging means that images at least the light of the predetermined wavelength; and decoding means that decodes a dot pattern image that is imaged by the imaging means to a dot code, wherein dots of the dot pattern are printed on the dot pattern reading surface with an ink that has a characteristic that absorbs at least the light of the predetermined wavelength or the characteristic that absorbs the light of the predetermined wavelength and a visible light transmission characteristic, and the diffuse reflection layer is formed by arranging a directional reflection material so as to diffusely reflect the light of the predetermined wavelength, irradiated from the irradiation means, toward the dot pattern reading surface.

(2) Further, the directional reflection material is polymer molecules.

(3) Further, the diffuse reflection layer is formed by arranging a plurality of cells where the polymer molecules are laminated in different directions.

(4) Further, the diffuse reflection layer is formed by arranging a plurality of cells where the polymer molecules are laminated in the same direction, with varied orientation angles.

(5) Further, the diffuse reflection layer is formed by arranging the cells with regularly varied orientation angles.

(6) Further, the diffuse reflection layer is formed by arranging cells where the polymer molecules are oriented in parallel along the dot pattern reading surface at a predetermined ratio.

(7) Further, the diffuse reflection layer is formed by enclosing crushed cells in a solvent that has the same refractive index as the cells.

(8) Further, the polymer molecules and the cells are made of a directional reflection material that transmits at least visible light.

(9) Further, the diffuse reflection layer arranges a plurality of kinds of polymer molecules that select and diffusely reflect the light of different predetermined wavelengths.

(10) Further, the directional material recursively reflects reflection light of the light of the predetermined wavelength to the incident direction by an optical laminated body.

(11) Further, the diffuse reflection layer comprises two transparent layers and a concavity that is formed in-between the transparent layers and of a surface portion that reflects the light of the predetermined wavelength and transmits visible light, wherein reflection light of the light of the predetermined wavelength is recursively reflected to the incident direction by reflection of the concavity.

(12) Further, the diffuse reflection layer is formed on the transparent layer, on the dot pattern reading surface side, of the two transparent layers.

(13) Further, the diffuse reflection layer comprises a bead layer that fixes a single transparent bead layer made of glass or resin by resin and a bead reflection layer that is provided in adjacent to the shape of the beads of the bead layer, reflects the light of the predetermined wavelength, and transmits visible light, wherein reflection light of the light of the predetermined wavelength is recursively reflected to the incident direction by reflection of the beads and the bead reflection layer.

(14) Further, dots of the dot pattern are printed with an ink that has a characteristic that absorbs the light of a plurality of kinds of different predetermined wavelengths or a characteristic that absorbs the light of the predetermined wavelengths and a visible light transmission characteristic.

(15) Further, dots are printed with the ink in accordance with a predetermined rule at predetermined positions of the dots where the dot pattern is formed.

(16) Further, the diffuse reflection layer diffusely reflects at least the light of the plurality of kinds of wavelengths, the irradiation means irradiates the light of the plurality of kinds of wavelengths, the filter transmits at least the light of the plurality of kinds of wavelengths and blocks visible light, and the imaging means images at least the light of the plurality of kinds of wavelengths.

(17) Further, a screen that can be projected at least visible light is attached to the opposite surface of the dot pattern reading surface and an image is projected by a projector to the dot pattern forming surface.

(18) Further, the predetermined medium is a printed matter, a display, or a transparent medium.

(19) Further, a protection layer that transmits at least visible light and the light of the predetermined wavelength is formed on the dot pattern reading surface.

(20) Further, the dot pattern is formed on the opposite surface of the dot pattern reading surface of the transparent sheet and the transparent sheet also functions as a protection layer.

(21) Further, coordinate values or coordinate values and a code value are coded in the dot pattern and a position in the dot pattern read by the optical reading device is recognized by the coordinate values.

(22) Further, the information input assistance sheet is classified or uniquely identified by an index that is defined by at least a portion of the coordinate values or the code value read by the optical reading device.

(23) Further, the light of the predetermined wavelength is infrared light or ultraviolet light.

(24) An optical reading device of the present invention reads a dot pattern formed on an information input assistance sheet in or out of contact with the information input assistance sheet that is adhered to or placed on a predetermined medium surface or near the medium surface, the optical reading device comprising: irradiation means that irradiates light of a predetermined wavelength; a filter that transmits at least the light of the predetermined wavelength and blocks visible light; imaging means that images at least the light of the predetermined wavelength; and decoding means that decodes a dot pattern image that is imaged by the imaging means to a dot code, wherein dots of the dot pattern are printed with an ink that has a characteristic that absorbs at least the light of the predetermined wavelength or the characteristic that absorbs the light of the predetermined wavelength and a visible light transmission characteristic.

(25) Further, the optical reading device further comprises transmission means that transmits the decoded dot code or an instruction and/or data that corresponds to the dot code to an information processing device.

(26) Further, the optical reading device further comprises output means that outputs the decoded dot code or information corresponding to an instruction and/or data that corresponds to the dot code.

(27) An information processing system of the present invention comprises: an information input assistance sheet that is adhered to or placed on a predetermined medium surface or near the medium surface; and an optical reading device that reads a dot pattern formed on the information input assistance sheet in or out of contact with the information input assistance sheet, the optical reading device comprising: irradiation means that irradiates light of a predetermined wavelength; a filter that transmits at least the light of the predetermined wavelength and blocks visible light; imaging means that images at least the light of the predetermined wavelength; and decoding means that decodes a dot pattern image that is imaged by the imaging means to a dot code, wherein dots of the dot pattern are printed with an ink that has a characteristic that absorbs at least the light of the predetermined wavelength or the characteristic that absorbs the light of the predetermined wavelength and a visible light transmission characteristic.

(28) Further, the optical reading device further comprises transmission means that transmits the decoded dot code or an instruction and/or data that corresponds to the dot code to an information processing device.

(29) Further, the dot code information processing system further comprises an output device that outputs the decoded dot code or information corresponding to an instruction and/or data that corresponds to the dot code.

ADVANTAGEOUS EFFECT OF THE INVENTION

According to the present invention, provided is an information input assistance sheet that has an infrared diffuse reflection layer formed of a material that makes it possible to read infrared reflection light from an ultra minute area, regardless of the contact angle of the optical reading device with the ultra minute area, when the optical reading device reads a dot pattern by causing infrared light emitted from the light source of the optical reading device to be reflected off the information input assistance sheet printed with dots that absorb infrared light.

**EP 3 089 003 A1**

BRIEF DESCRIPTION OF THE DRAWINGS

Fig. 1A is a section view showing the way a scanner reads a grid sheet of the present invention; Fig. 1B is a diagram showing a captured image read by a lens;

Fig. 2A is a section view showing the way the scanner reads the grid sheet of the present invention with inclination; Fig.2B is a diagram showing a captured image read by the lens;

Fig. 3 is a projection view schematically showing a cell of an infrared diffusion layer of a grid sheet of first to sixth embodiments of the present invention;

Fig. 4 is a section view schematically illustrating diffuse reflection of an infrared diffusion layer of a grid sheet of the first embodiment of the present invention;

Fig. 5 is a section view schematically illustrating diffuse reflection of an infrared diffusion layer of a grid sheet of the second embodiment of the present invention;

Figs. 6A and 6B are a section view schematically illustrating diffuse reflection of an infrared diffusion layer of a grid sheet of the third embodiment of the present invention;

Fig. 7 is a section view schematically illustrating diffuse reflection of an infrared diffusion layer of a grid sheet of the fourth embodiment of the present invention;

Fig. 8 is a section view schematically illustrating diffuse reflection of an infrared diffusion layer of a grid sheet of the fifth embodiment of the present invention;

Fig. 9 is a section view schematically illustrating diffuse reflection of an infrared diffusion layer of a grid sheet of the sixth embodiment of the present invention;

Fig. 10 is a projection view schematically showing a cell of an infrared diffusion layer of a grid sheet of a seventh embodiment of the present invention;

Fig. 11 is a section view schematically illustrating diffuse reflection of an infrared diffusion layer of a grid sheet of an eighth embodiment of the present invention;

Fig. 12 is a section view schematically illustrating recursive reflection of an infrared recursive reflection layer of a grid sheet of a ninth embodiment of the present invention;

Fig. 13 is a section view schematically illustrating recursive reflection of an infrared recursive reflection layer of a grid sheet of a tenth embodiment of the present invention;

Fig. 14 is a diagram showing an example of using a grid sheet of the present invention for a printed matter;

Fig. 15 is an enlarged view schematically showing a grid sheet of an eleventh embodiment of the present invention;

Fig. 16 is a section view schematically showing a dot pattern layer and an infrared recursive reflection layer of a grid sheet of the eleventh embodiment of the present invention;

Fig. 17 is a diagram showing an example of output characteristics of IR-LED1 that irradiates infrared light to a grid sheet of the present invention;

Fig. 18 is a diagram illustrating the infrared absorption rate of information dots when IR-LED1 irradiates infrared light of 840 nm to reference grids;

Fig. 19 is a diagram showing an example of output characteristics of IR-LED2 that irradiates infrared light to a grid sheet of the present invention;

Fig. 20 is a diagram illustrating the infrared absorption rate of information dots when IR-LED2 irradiates infrared light of 860 nm to reference grids;

Fig. 21 is a diagram showing an example of output characteristics of IR-LED3 that irradiates infrared light to a grid sheet of the present invention;

Fig. 22 is a diagram illustrating the infrared absorption rate of information dots when IR-LED3 irradiates infrared light with a wavelength band of 840 to 860 nm to reference grids;

Fig. 23 is a section view schematically showing a grid sheet of a twelfth embodiment of the present invention;

Figs. 24A and 24B are diagrams illustrating a conventional grid sheet;

Figs. 25A and 25B are diagrams illustrating a conventional grid sheet when a scanner is used with inclination;

Figs. 26A to 26C show a thirteenth embodiment of the present invention and are schematic section views for illustrating the operation principle of an information input assistance sheet; Fig. 26A shows a case using a display as a medium; Fig. 26B shows a case using a transparent medium as a medium; Fig. 26C shows a case using a printed medium as a medium;

Figs. 27A to 27C show a fourteenth embodiment of the present invention and are schematic section views for illustrating the operation principle of an information input assistance sheet; Fig. 27A shows a case using a display as a medium; Fig. 27B shows a case using a transparent medium as a medium; Fig. 27C shows a case using a printed medium as a medium;

Figs. 28A to 28C show a fifteenth embodiment of the present invention and are schematic section views for illustrating the operation principle of an information input assistance sheet; Fig. 28A shows a case using a display as a medium; Fig. 28B shows a case using a transparent medium as a medium; Fig. 28C shows a case using a printed medium as a medium;

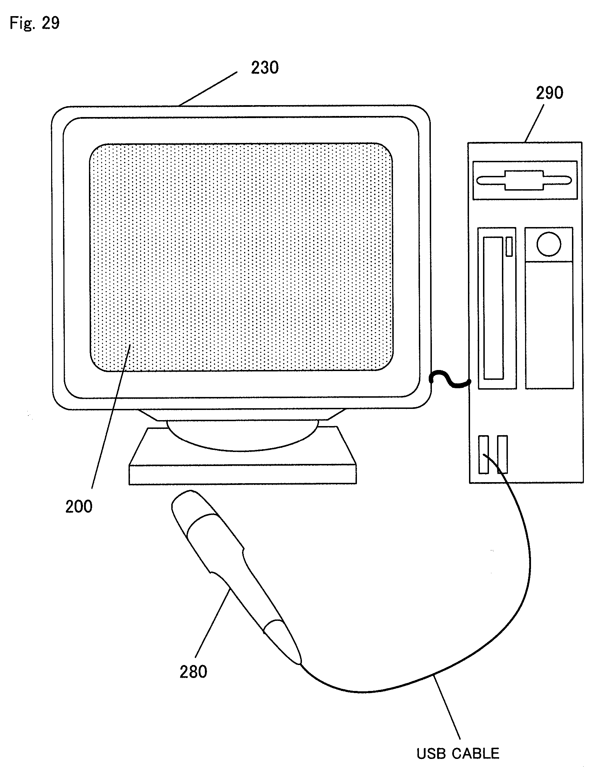

Fig. 29 shows a sixteenth embodiment of the present invention and is a front view for illustrating an example of an information processing device;

Figs. 30A and 30B are explanatory views for illustrating dots; Fig. 30A shows a photograph of a read image; Fig. 30B shows a table indicating a coordinate value table;

Figs. 31A to 31E are for illustrating embodiments of an information dot; Fig. 31 A shows a first example; Fig 31B shows a second example; Fig. 31C shows a third example; Fig. 31D shows a fourth example; and Fig. 31E shows a fifth example;

Figs. 32A to 32C are for illustrating embodiments of a dot code allocation format; Fig. 32A shows a first example; Fig 32B shows a second example; Fig. 32C shows a third example;

Figs. 33A to 33C are for illustrating an embodiment of a first example of a dot pattern ("GRID0"); Fig. 33A shows a first general example; Fig 33B shows a second general example; Fig. 33C shows a third general example;

Figs. 34A to 34C correspond to Figs. 33A to 33C and are for illustrating variants of the dot pattern ("GRID0"); Fig. 34A shows a first variant; Fig 34B shows a second variant; Fig. 34C shows a third variant;

Figs. 35A to 35C are for illustrating variants of the dot pattern ("GRID0"); Fig. 35A shows a fourth variant for illustrating an embodiment of a second example ("GRID1") of the dot pattern; Fig 35B shows a fifth variant; Fig. 35C shows a sixth variant;

Figs. 36A and 36B are for illustrating a coupling example and a concatenating example of the dot pattern (GRID0, GRID1); Fig. 36A shows a coupling example of the dot pattern (GRID0, GRID1); Fig. 36B shows a first concatenating example of the dot pattern (GRID0);

Figs. 37A and 37B show a second concatenating example of the dot pattern (GRID0), continuing from Figs. 36A and 36B;

Fig. 38 is an explanatory diagram for illustrating the way of calculating the center when the arrangement of the dot pattern (GRID1) has changed;

Figs. 39A to 39C are for illustrating an embodiment of a third example ("GRID5") of the dot pattern; Fig. 39A shows a first general example; Fig 39B shows a second general example; Fig. 39C shows a third general example;

Figs. 40A and 40B are for illustrating variants of the dot pattern (a distinctive example of GRID5, "direction dot"); Fig. 40A shows a first variant; Fig. 40B shows a second variant; Fig. 40C shows a third variant;

Figs. 41 A and 41B are for illustrating variants of the dot pattern (direction dot); Fig. 41A shows a fourth variant; Fig 41B shows a fifth variant;

Figs. 42A to 42C are for illustrating variants of the dot pattern (direction dot); Fig. 42A shows a sixth variant; Fig. 42B shows a seventh variant;

Figs. 43A to 43C are for illustrating variants of the dot pattern (GRID5); Fig. 43A shows an eighth variant; Fig. 43B shows a ninth variant;

Figs. 44A and 44B are for illustrating reading of the dot pattern; Fig. 44A shows a first reading example; Fig. 44B shows a second reading example;

Fig. 45 is for illustrating reading of the dot pattern continuing from Figs. 44A and 44B; Fig. 45 shows a third reading example;

Figs. 46A to 46C show Embodiment 1 of calibration for illustrating a calibration method and are explanatory diagrams of an information input assistance sheet (grid sheet) used for a calibration method and calibration for a display;

Figs. 47A to 47C show Embodiment 1 of calibration and are explanatory diagrams of another example of the calibration method for a display;

Figs. 48A and 48B show Embodiment 1 of calibration and are explanatory diagrams of an information input assistance sheet (grid sheet) used for a calibration method and calibration for a printed medium (printed matter);

Figs. 49A and 49B show Embodiment 1 of calibration and are explanatory diagrams of another example of the calibration method for a printed medium (printed matter);

Figs. 50A and 50B show Embodiment 1 of calibration and are explanatory diagrams of an example of the calibration method for a display with one calibration mark;

Figs. 51 A and 51B show Embodiment 1 of calibration and are explanatory diagrams of an example of the calibration method for a printed medium (printed matter) with two calibration marks;

Fig. 52 shows Embodiment 2 of calibration and is an explanatory diagram of an example in which a code value and XY coordinate values are defined in a dot pattern when calibration of brightness is performed;

Figs. 53A and 53B show Embodiment 2 of calibration and are explanatory diagrams of an example in which XY coordinate values are defined in a dot pattern when calibration of brightness is performed;

Fig. 54 shows Embodiment 3 of calibration and is an explanatory diagram of an example in which a code value and XY coordinate values are defined in a dot pattern when calibration of a size is performed; and

Figs. 55A and 55B show Embodiment 3 of calibration and are explanatory diagrams of an example in which XY coordinate values are defined in a dot pattern when calibration of a size is performed.

DETAILED DESCRIPTION OF THE EMBODIMENTS

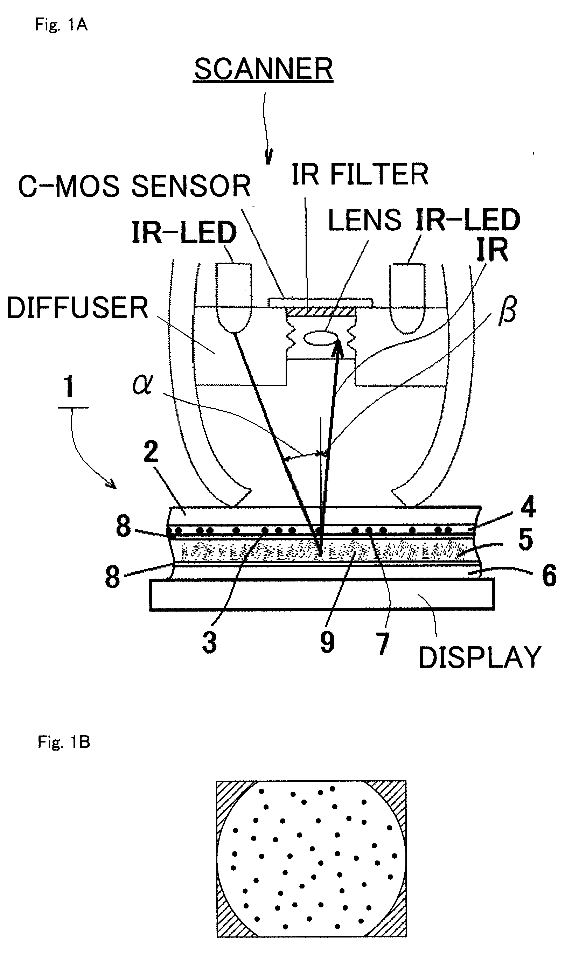

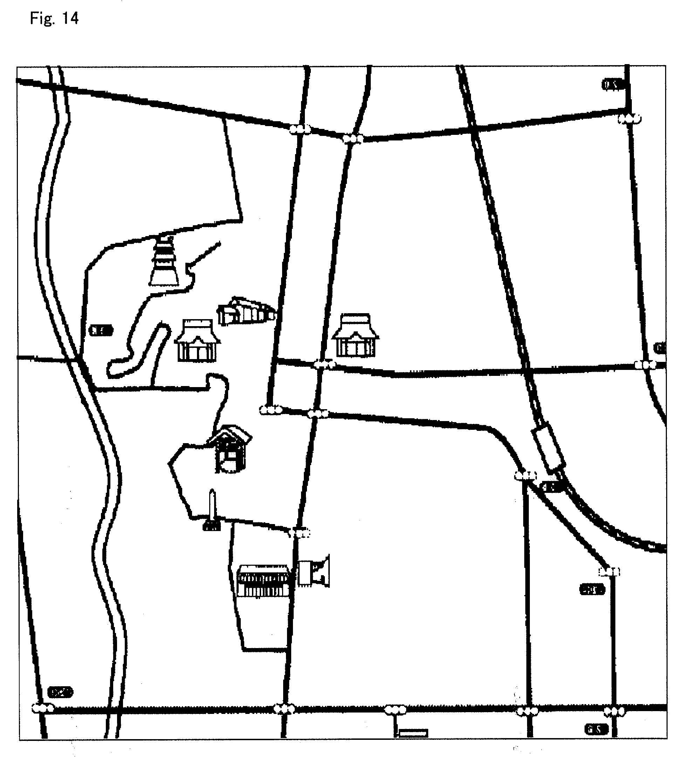

The following will describe the first to twelfth embodiments relating to a directional reflection layer of the information input assistance sheet of the present invention with reference to Figs. 1A to 15, then, describe the eleventh and twelfth embodiments relating to a dot pattern layer of the information input assistance sheet of the present invention with reference to Figs. 14 to 25B.

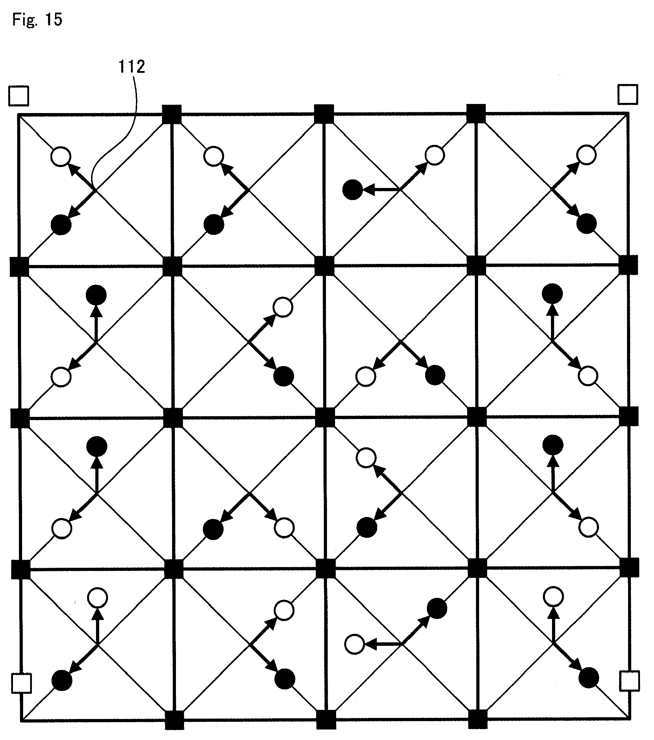

The following will further describe the first to eighth embodiments relating to an infrared diffusion layer that diffusely reflects infrared light in the directional reflection layer of the information input assistance sheet of the present invention with reference to Figs. 1A to 11, then, describe the eleventh and twelfth embodiments relating to an infrared recursive reflection layer that recursively reflects infrared light in the directional reflection layer of the information input assistance sheet of the present invention with reference to Figs. 14 and 15.

(Structure of grid sheet)

Fig. 1 A is a section view showing how the grid sheet of the present invention is read by a scanner. Fig. 1B is a diagram illustrating a captured image read by a lens. As shown in Fig. 1A, in order to read information relating to what is displayed on a display using infrared light IR irradiated by the scanner, the grid sheet 1 comprises, from the scanner side, a protecting transparent sheet (protection layer) 2, a dot pattern layer 4 (a dot pattern is printed on the back surface of the protection layer 2), on which are printed dots 3 that include a characteristic material that absorbs infrared light (represented by a sign "IR" in Fig. 1A and hereinafter also referred to as "infrared light IR." Indication of "infrared light IRx" is made to specify the wavelength of infrared light), an infrared diffusion layer 5, provided adjacent to the dot pattern layer 4, which selects infrared light by coated polymer molecules 9 and diffusely reflects the reflection light in the reflection angle $\beta$ direction that is different from the incident angle $\alpha$ with respect to the normal line of the grid sheet 1, and an infrared reflection layer 6, provided adjacent to the infrared diffusion layer 5, which specularly reflects the reflection light of the infrared light in a reflection angle direction that is the same direction as the incident angle with respect to the normal line of the grid sheet 1 and transmits visible light. The infrared diffusion layer 5 may be an infrared diffuse reflection layer. The infrared reflection layer 6 is not necessary as long as the infrared diffusion layer 5 can sufficiently reflect infrared light.

The protecting transparent sheet 2 is made of a material that transmits visible light and infrared light, such as vinyl, polyvinyl chloride, polyethylene terephthalate, and polypropylene. Since repetitive touch by the scanner on the dots 3 may ware and make it hard to read the dot pattern 7 constituted of the dots 3, the protecting transparent sheet 2 is provided to protect wearing and stain of the dots 3 so as to make the dot pattern 7 to be read correctly for a long time. The dots can be completely protected by printing the dot pattern on the opposite side of the reading surface.

The dot pattern layer 4 has a dot pattern 7, in which dots 3 that contain a characteristic material, such as a carbon ink that absorbs infrared light, are printed in accordance with a rule indicating predetermined information.

The infrared diffusion layer 5 has a support body 8 and polymer molecules 9 coated on the support body 8. The infrared light transmitted through the protecting transparent sheet 2 is diffusely reflected in a direction of a reflection angle $\beta$ that is different from the incident angle $\alpha$ with respect to the normal line of the grid sheet 1 by the polymer molecules 9 coated on the infrared diffusion layer 5. To use the infrared diffusion layer 5 also as the infrared reflection layer 6, polymer molecules 9 that diffusely reflect infrared light are deposited on a transparent sheet for deposition that is made of a material that transmits visible light, such as vinyl, polyvinyl chloride, polyethylene terephthalate, and polypropylene. It should be noted that the support body 8 may not necessary depending on the forming method.

The infrared reflection layer 6 is formed by depositing polymer molecules 9 that reflects infrared light on a transparent sheet for deposition that is made of a material that transmits visible light, such as vinyl, polyvinyl chloride, polyethylene terephthalate, and polypropylene. The infrared light transmitted through the infrared reflection layer 5 is specularly reflected in a direction of a reflection angle that is the same as the incident angle with respect to the normal line of the grid sheet 1 by the polymer molecules 9 deposited on the infrared reflection layer 6. The infrared reflection layer 6 transmits visible light and blocks infrared light from a display.

(Scanner structure)

The scanner comprises two IR-LEDs that irradiate infrared light to the grid sheet 1 disposed on the display screen of a display, a lens provided in-between the two IR-LEDs for receiving reflection light of the infrared light, an IR filter that blocks predetermined wavelength elements of the reflection light received by the lens, a diffuser for evenly irradiating the infrared light to the grid sheet 1, and a C-MOS sensor as an imaging element. There may be only one IR-LED as long as sufficient infrared light is irradiated.

The C-MOS sensor of the scanner images the reflection light of the infrared light irradiated to the grid sheet 1. Since the dot pattern 7 is printed with an ink that includes a characteristic material that absorbs infrared light, only the portion of the dots 3 where infrared light is absorbed and not reflected is imaged in black in the captured image by the C-MOS sensor.

The infrared light irradiated from the IR-LED is diffusely reflected from the infrared diffusion layer 5 and the infrared light transmitted through the infrared reflection layer 5 is specularly reflected off the infrared reflection layer 6. The lens of the scanner can receive reflection light of the infrared light IR from the entire imaging area by diffuse reflection of the infrared diffusion layer 5 as shown in Fig. 1B. Since specular reflection of the infrared reflection layer 6 compensates brightness in the normal line direction of the grid sheet 1, a bright and clear dot pattern 7 is imaged, enabling accurate analysis of the dot codes. The infrared diffusion layer 5 can also function as an infrared reflection layer 6, as long as the infrared diffusion layer 5 sufficiently reflects infrared light and a bright and clear dot pattern 7 is imaged.

It should be noted that, while having the protecting transparent sheet 2 is not essential, the infrared reflection layer 6 is not essential either, when the dot pattern layer 4 is provided adjacent to the protecting transparent sheet 2; the infrared diffusion layer 5 is provided adjacent to the dot pattern layer 4; and the infrared reflection layer 6 is provided adjacent to the infrared diffusion layer 5. If the brightness of the infrared reflection light IR is not sufficient, illuminance of the IR-LED may be increased to compensate the brightness.

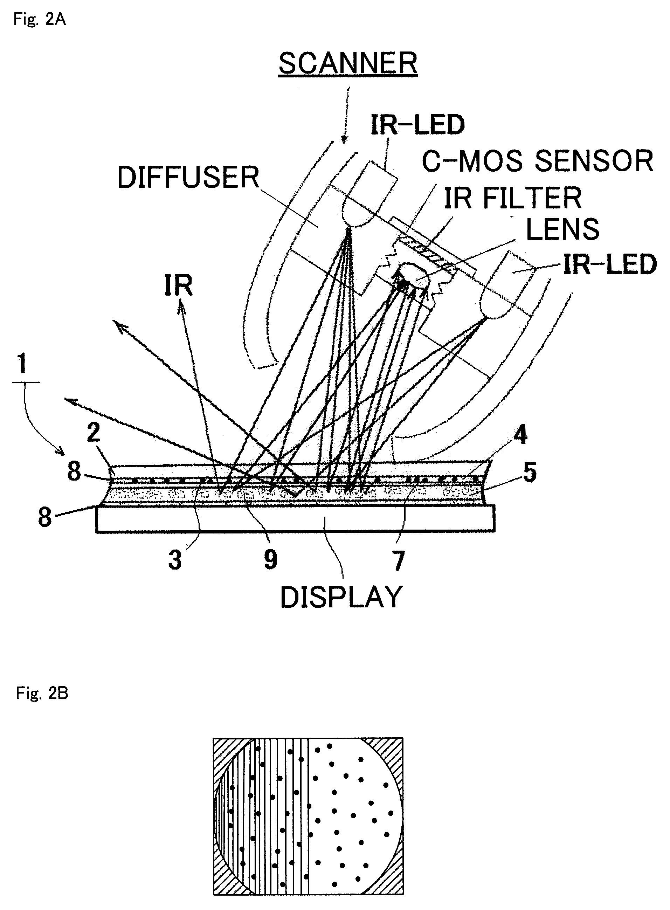

Fig. 2A is a section view showing how the grid sheet of the present invention is read by the scanner with inclination. Fig. 2B is a diagram showing a captured image read by the lens. In Fig. 2A, the infrared diffusion layer 5 is directly disposed on the display screen of the display without having the infrared reflection layer 6 in the grid sheet 1.

As shown in Fig. 2B, since the infrared light irradiated from the IR-LED is diffusely reflected off the infrared diffusion layer 5, the lens of the scanner can receive the infrared reflection light from the entire imaging area regardless of the contact angle of the scanner with respect to the grid sheet 1. However, depending on the inclination angle of the scanner, the inclined side may become bright and the opposite side may become dark with a possibility of not receiving infrared reflection light.

<First embodiment>

(Cell of infrared diffusion layer)

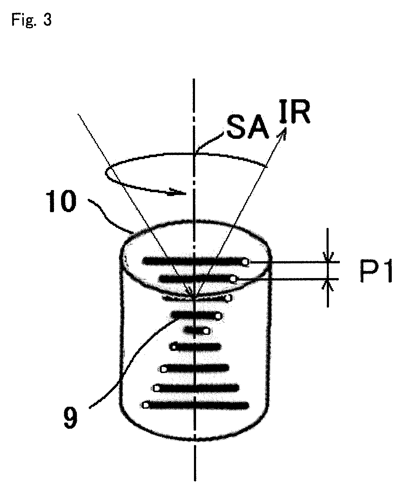

Fig. 3 is a projection view schematically showing a cell of an infrared diffusion layer of the grid sheet of the first to sixth embodiments of the present invention. As shown in Fig. 3, the cell 10 of the infrared diffusion layer 5 is made of liquid crystal polymers having cholesteric regularity with a plurality of laminated layers, each of which has a molecular sequence, in which polymer molecules 9 are aligned in one direction, and the cell has a spiral structure where each layer is twisted a little from an adjacent layer.

As long as the liquid crystal has cholesteric regularity, the liquid crystal may be chiral nematic liquid crystal or cholesteric liquid crystal, and the twist may be formed by adding chiral agent or the like to a liquid crystal material that has nematic regularity or smectic regularity.

The cell 10 selectively reflects, with respect to the spiral axis SA of the spiral structure, only the incident light of the infrared light IR of a wavelength that is determined by the product of a spiral pitch P1 between the polymer molecules 9 and the average refractive index R1 of liquid crystal. Since the selected wavelength is infrared light, the liquid crystal becomes transparent.

It should be noted that the shape of the cell 10 is not limited to a pillar shape, such as a column or a prism, as shown in Fig. 3. The shape of the cell 10 may be a disk shape, a rugby-ball-shaped ellipsoid body, a bread roll shape, a combination of the bread roll shape and the rugby ball shape, or the like.

(Infrared diffusion layer)

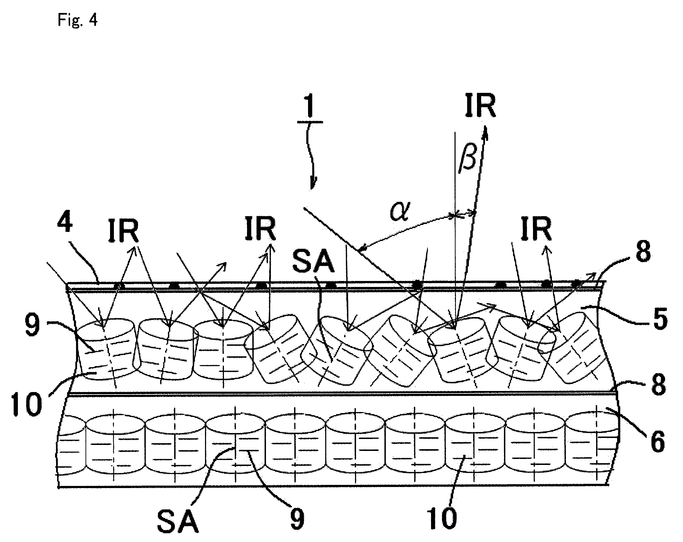

Fig. 4 is a section view schematically illustrating diffuse reflection of an infrared diffusion layer of the grid sheet of the first embodiment of the present invention. As shown in Fig. 4, in the infrared diffusion layer 5 of the grid sheet 1 of the first embodiment, the orientation angles of a plurality of cells 10 where polymer molecules 9 are laminated in the same direction so as to selectively reflect infrared light IR are irregularly changed and arranged with respect to the plane surface of the grid sheet 1. For example, the infrared diffusion layer 5 may be formed by adding a surface conditioner such as leveling agent that is used for improving leveling and flow of the surface of the liquid crustal polymers and adding heat and vibration.

As each cell 10 with a different orientation angle with respect to the plane surface of the grid sheet 1 is arranged in the infrared diffusion layer 5, the infrared diffusion layer 5 includes many cells 10, of which spiral axis SA is not arranged perpendicular to the grid sheet 1, and the infrared light irradiated from the IR-LED is reflected in a reflection angle $\beta$

direction that is different from the incident angle α with respect to the grid sheet 1 by the polymer molecules 9 of each cell 10. Since the orientations of the spiral axes SA of adjacent cells 10 in the infrared diffusion layer 5 irregularly vary, the reflection light of the infrared light is diffusely reflected.

As the lens of the scanner can receive reflection light, from the entire imaging area, of the infrared light irradiated from the IR-LED by diffuse reflection of the infrared diffusion layer 5, any light-receiving-disabled area that cannot receive infrared reflection light as shown in Figs. 24A to 25B does not exist as shown in Fig. 1B. However, depending on the inclination degree of the scanner, the inclined side becomes bright and the opposite side becomes dark, generating an area, from which the infrared reflection light cannot be received.

Since the size of a dot 3 in the dot pattern layer 4 is about 50 μm and the size of a cell 10 in the infrared diffusion layer 5 is several nanometers to several tens nanometers, there are several hundreds to several thousands of polymer molecules 19 of the cells 10 in the infrared diffusion layer 5 for one dot 3 in the dot pattern layer 4. As the image of one dot 3 is captured by diffuse reflection of the several hundreds to several thousands of polymer molecules 19 of the cells 10, infrared reflection light from a micrometer-level minute area can be accurately read in nanometer level.

(Infrared reflection layer)

The infrared reflection layer 6 is formed by arranging the orientations of a plurality of cells 10 in a manner in which the orientations of the spiral axes SA of the cells 10, in which polymer molecules 9 are laminated in the same direction, become perpendicular to the grid sheet 1 so as to selectively reflect infrared light. The infrared light irradiated from the IR-LED is diffusely reflected by the infrared diffusion layer 5 and the infrared light IR transmitted through the infrared diffusion layer 5 is specularly reflected by the infrared reflection layer 6. The infrared diffusion layer 5 can also function as infrared reflection layer 6, as long as the infrared diffusion layer 5 sufficiently reflects the infrared light and a bright and clear dot pattern 7 is imaged.

According to the first embodiment, since the orientation angles of the plurality of cells 10 where polymer molecules 9 are laminated in the same direction are irregularly changed and arranged, the lens of the scanner can receive the reflection light of the infrared light from the entire imaging area. However, depending on the inclination angle of the scanner, the inclined side becomes bright and the opposite side becomes dark, generating an area, from which the infrared reflection light cannot be received.

<Second embodiment>

(Infrared diffusion layer)

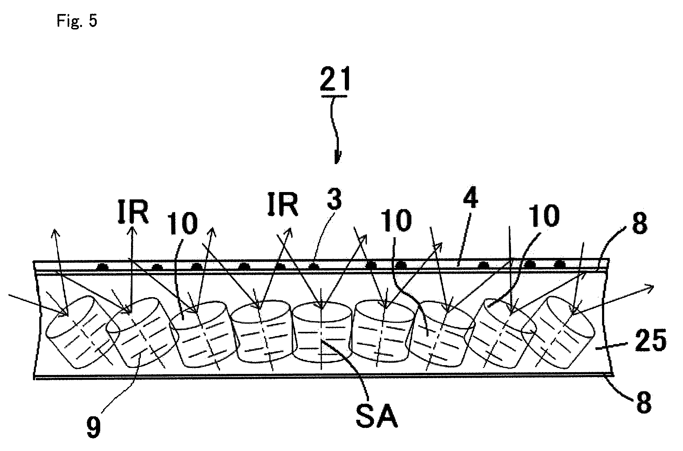

Fig. 5 is a section view schematically illustrating diffuse reflection of an infrared diffusion layer of the grid sheet of the second embodiment of the present invention. As shown in Fig. 5, the infrared diffusion layer 25 of the grid sheet 21 of the second embodiment is formed by regularly changing and arranging the orientation angles of the plurality of cells 10, where polymer molecules 9 are laminated in the same direction so as to selectively reflect infrared light, with respect to the plane surface of the grid sheet 21.

As the orientation angles of the cells 10 of the infrared diffusion layer 25 with respect to the plane surface of the grid sheet 21 regularly vary, the orientations of the spiral axes SA also regularly vary. Thus, when infrared light is irradiated from the IR-LED, the infrared light reflected by the polymer molecules 9 of the cells 10 is uniformly diffusely reflected with repeated dense and sparse portions in nanometer level.

By diffuse reflection of the infrared diffusion layer 25, the lens of the scanner can receive reflection light, from the entire imaging area, of the infrared light irradiated from the IR-LED regardless of the contact angle of the scanner with respect to the plane surface of the grid sheet 21. When the scanner is inclined and infrared reflection light from the area in the outer inclination direction lacks brightness or when infrared light is irradiated from outside of the scanner and infrared reflection light from the surrounding area of the imaging area lacks brightness, illuminance of the IR-LED is set to increase. When the IR-LED irradiates infrared light for predetermined time at predetermined intervals, the irradiation time may be made longer. As an alternative measure, electric current supplied to the IR-LED may be increased or the gain thereof may be increased upon imaging.

According to the second embodiment, since the orientation angles of the plurality of cells 10 where polymer molecules 9 are laminated in the same direction are regularly varied and arranged, the lens of the scanner can receive reflection light of the infrared light, which is diffusely reflected from the entire imaging area, while the infrared reflection light becomes repeatedly dense and sparse in nanometer level. When the scanner is inclined, since the amount of incident light decreases in the area in the outer inclination direction and the area surrounding the imaging area, the received reflection light of the infrared light also decreases.

<Third embodiment>

(Infrared diffusion layer)

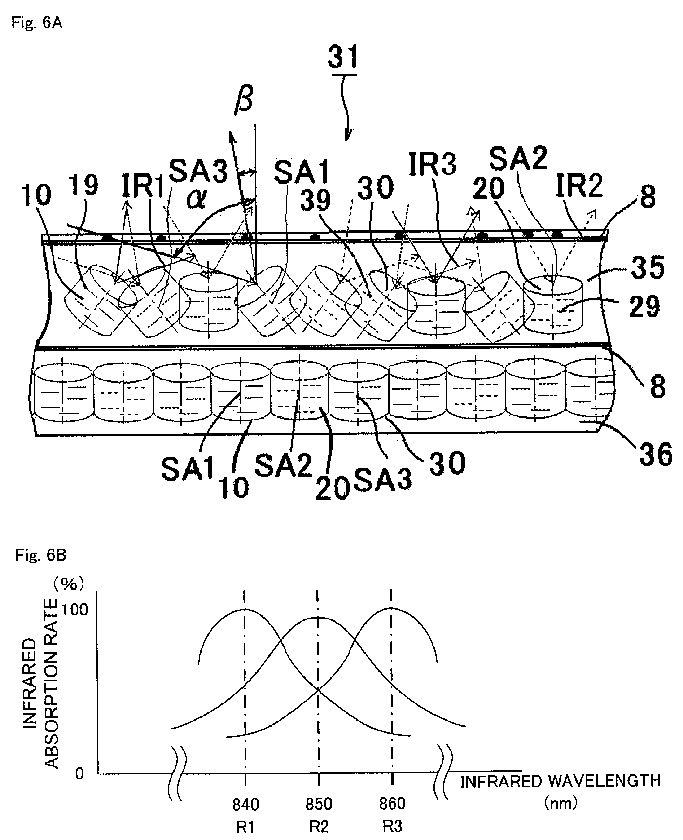

Figs. 6A and 6B are a section view schematically illustrating diffuse reflection of an infrared diffusion layer of the grid sheet of the third embodiment of the present invention. As shown in Figs. 6A and 6B, the infrared diffusion layer 35 of the grid sheet 31 of the third embodiment is formed by arranging a plurality of cells 10, 20, 30, which selectively reflect infrared light of different wavelengths, IR1, IR2, IR3, with irregular orientation angles.

The cells 10, 20, 30 can respectively reflect infrared light at peak wavelengths; for example, the infrared light IR1 of around 840 nm is selectively reflected by the cells 10, the infrared light IR2 of around 850 nm is selectively reflected by the cells 20, and the infrared light IR3 of around 860 nm is selectively reflected by the cells 30 by changing the product of the spiral pitch of the polymer molecules 19, 2909 of the cells 10, 20, 30 and the average refractive index of the liquid crystal. In this way, infrared light in-between infrared light IR1 and IR2 and in-between IR2 and IR3 can also be reflected (Fig. 6B). While IR1 to IR3 are used in this example, the infrared light wavelength may be further divided and infrared light of a wavelength that the cells 20 selectively reflect can be further selectively reflected.

The infrared reflection layer 36 is formed by arranging a plurality of cells 10, 20, 30 in order so that the orientations of the spiral axes SA1, SA2, SA3 of the spiral structures of the cells 10, 20, 30, in which polymer molecules 19, 2909 that selectively reflect infrared light IR1, IR2, IR3 are laminated in the same direction, become perpendicular to the grid sheet 31.

Since the cells 10, 20, 30 of the infrared diffusion layer 35 are arranged with irregularly varied orientation angles, the infrared diffusion layer 35 has many cells 10, 20, 30, of which the orientations of spiral axes SA1, SA2, SA3 are not arranged perpendicular to the grid sheet 1. The infrared diffusion layer 35 diffusely reflects the infrared light IR1, IR2, IR3 irradiated from the IR-LED in a reflection angle $\beta$ direction that is different from the incident angle $\alpha$ by the polymer molecules 19, 2909 of the cells 10 where the orientations of the spiral axes SA1, SA2, SA3 are not arranged perpendicular to the grid sheet 31.

For example, when infrared light IR1 is irradiated from the IR-LED, the irradiated infrared light IR1 is diffusely reflected by the polymer molecules 19 of the cells 10, while being transmitted through the cells 20 and 30. When infrared light IR2 is irradiated from the IR-LED, the irradiated infrared light IR2 is diffusely reflected by the polymer molecules 29 of the cells 20, while being transmitted through the cells 10 and 30. When infrared light IR3 is irradiated from the IR-LED, the irradiated infrared light IR3 is diffusely reflected by the polymer molecules 39 of the cells 30, while being transmitted through the cells 10 and 20. If the reflection peaks of the cells 10, 30 for the infrared light from the IR-LED are adjacent, a portion of the infrared light is transmitted through the cells 20 that have a reflection peak at another wavelength and the rest of the infrared light is diffusely reflected.

When infrared light in a wavelength band of infrared light IR1 to infrared light IR3 is irradiated from the IR-LED, the polymer molecules 19 of the cells 10 selectively and diffusely reflect infrared light IR1; the polymer molecules 29 of the cells 20, infrared light IR2; and the polymer molecules 39 of the cells 30, infrared light IR3.

The infrared light of wavelengths from infrared light IR1 to IR3 that is irradiated from the IR-LED is diffusely reflected by the infrared diffusion layer 35, and the infrared light IR1 to IR3 transmitted through the infrared diffusion layer 35 is specularly reflected by the infrared reflection layer 36, thus, the lens of the scanner can receive infrared light of wavelengths IR1 to IR3 irradiated from the IR-LED and the C-MOS sensor can image bright and clear dot patterns. However, depending on the inclination angle of the scanner, the inclined side may become bright and the opposite side may become dark, generating an area, from which the infrared reflection light cannot be received.

It should be noted that equipping the infrared reflection layer 36 is not essential, and the infrared diffusion layer 5 can also function as the infrared reflection layer 6, as long as the infrared diffusion layer 5 can sufficiently reflect infrared light when the infrared reflection light IR lacks brightness, and a bright and clear dot pattern 7 can be imaged. Alternatively, the illuminance of IR-LED may be increased to compensate the brightness. When the IR-LED irradiates infrared light for predetermined time at predetermined intervals, the intervals may be shortened and/or irradiation time may be made longer.

<Fourth embodiment>

(Infrared diffusion layer)

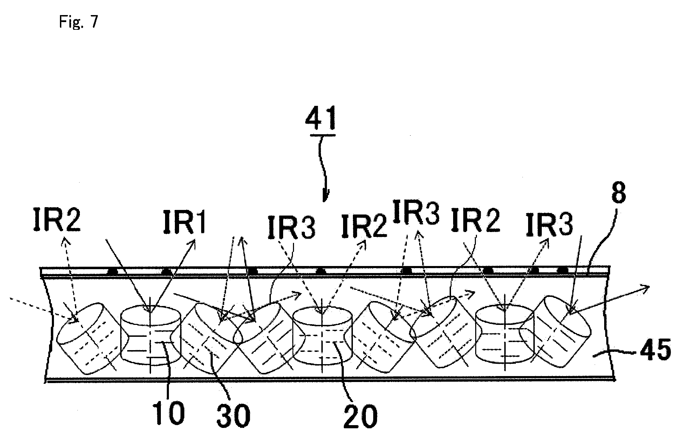

Fig. 7 is a section view schematically illustrating diffuse reflection of an infrared diffusion layer of the grid sheet of the fourth embodiment of the present invention. As shown in Fig. 7, the infrared diffusion layer 45 of the grid sheet 41 of the fourth embodiment is formed by arranging orientation angles of a plurality of kinds of cells 10, 20, 30, which selectively reflect different infrared wavelengths of IR1, IR2, IR3, so as to maintain regularity where the ratio of cells that specularly reflect infrared light is a third, as well as, make the cells 10, 20, 30 specularly reflect infrared light in order.

While IR1 to IR3 are used in this example, the infrared light wavelength may be further divided and infrared light of a wavelength that the cells 20 selectively reflect can be further selectively reflected.

Since the cells are arranged in a manner in which the ratio of the cells that specularly reflect infrared light becomes a third, as well as, the cells 10, 20, 30 specularly reflect infrared light in order, when infrared light IR1, IR2, and IR3 is independently irradiated and when infrared light of a wavelength band from infrared light IR1 to IR3 is irradiated from the IR-LED, the minimum reflection light of infrared light In1, IR2, or IR3 in the normal line direction of the grid sheet 41 is assured.

<Fifth embodiment>

(Infrared diffusion layer)

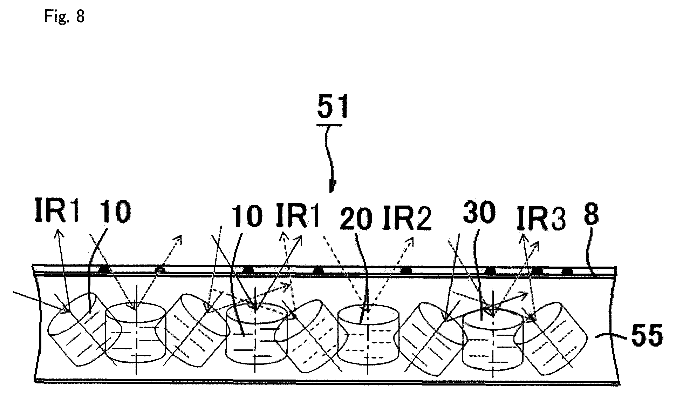

Fig. 8 is a section view schematically illustrating diffuse reflection of an infrared diffusion layer of the grid sheet of the fifth embodiment of the present invention. As shown in Fig. 8, the infrared diffusion layer 55 of the grid sheet 51 of the fifth embodiment is formed by arranging the orientation angles of a plurality of kinds of cells 10, 20, 30, which selectively reflect different infrared wavelengths of IR1, IR2, IR3, so as to maintain regularity where the ratio of cells that specularly reflect infrared light is a half, as well as, make the cells 10, 20, 30 specularly reflect infrared light in order. While IR1 to IR3 are used in this example, the infrared light wavelength may be further divided and infrared light of a wavelength that the cells 20 selectively reflect can be further selectively reflected.

Since the cells are arranged in a manner in which the ratio of the cells that specularly reflect infrared light becomes a half, as well as, the cells 10, 20, 30 specularly reflect infrared light in order, when infrared light IR1, IR2, and IR3 is independently irradiated and when infrared light of a wavelength band from infrared light IR1 to IR3 is irradiated from the IR-LED, the amount of the reflection light of infrared light IR1, IR2, IR3 in the normal line direction of the grid sheet 51 becomes larger than the fifth embodiment.

<Sixth embodiment>

(Infrared diffusion layer)

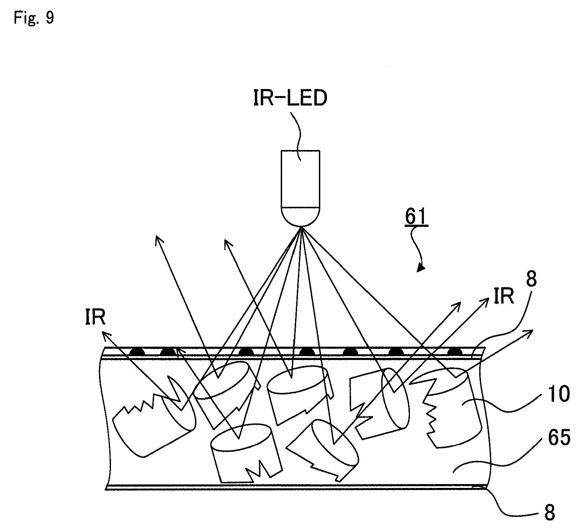

Fig. 9 is a section view schematically illustrating diffuse reflection of an infrared diffusion layer of the grid sheet of the sixth embodiment of the present invention. As shown in Fig. 9, the infrared diffusion layer 65 of the grid sheet 61 of the sixth embodiment is made by crushing the cells 10 that reflect infrared light IR, mixing with a solvent 68 that has the same refractive index as the cells 10, and coating the support body 8 with the mixture. The crushed cells 10 are arranged in a variety of directions when mixed in the solvent 68, and such a state where the crushed cells 10 are arranged in a variety of directions is maintained in the solvent 68.

As the surfaces of the crushed cells 10 are arranged in a variety of directions in nanometer level, the infrared light IR is diffusely reflected. By making the refractive index of the solvent 68 the same as the refractive index of the cells 10, the grid sheet can be prevented from being cloudy, which happens when all visible light is reflected off the surfaces of the crushed cells 10 arranged in a variety of directions, thus, the grid sheet can be used as a transparent sheet.

<Seventh embodiment>

(Cell of infrared diffusion layer)

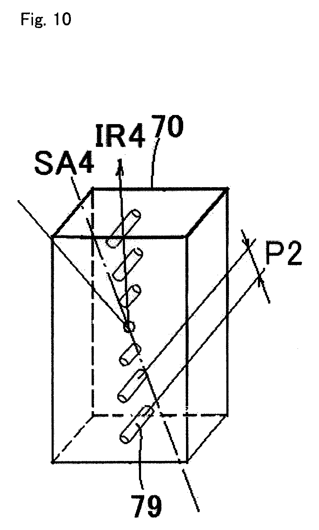

Fig. 10 is a projection view schematically showing a cell of an infrared diffusion layer of the grid sheet of the seventh embodiment of the present invention. As shown in Fig. 10, the cell 70 is made of a nematic liquid crystal polymer with an oblique lamination of a plurality of layers of polymer molecules 79, where each of the layers has a molecular sequence aligned in one direction, and the cell has a spiral structure where each layer is twisted a little from an adjacent layer.

The cell 70 selectively reflects only the incident light of the infrared light IR4 of a wavelength that is determined by the product of a spiral pitch P2 between the polymer molecules 79 and the average refractive index R2 of liquid crystal, symmetrically about the spiral axis SA4 of the spiral structure that is formed obliquely in the pillar-shaped cell 70. Since the selected wavelength is infrared light, the liquid crystal becomes transparent.

<Eighth embodiment>

(Infrared diffusion layer)

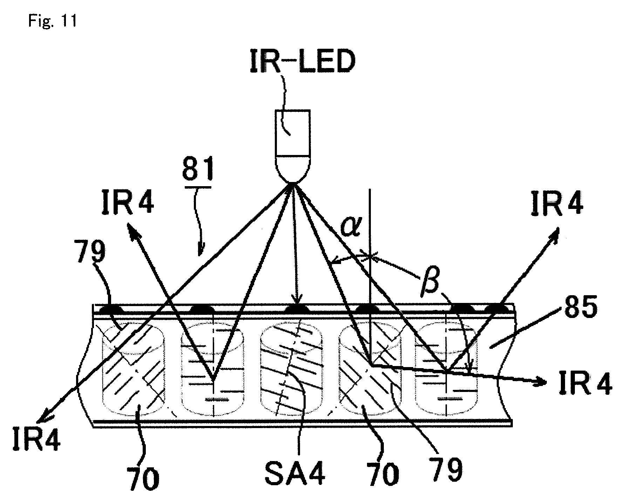

Fig. 11 is a section view schematically illustrating diffuse reflection of an infrared diffusion layer of the grid sheet of the eighth embodiment of the present invention. As shown in Fig. 11, the infrared diffusion layer 85 of the grid sheet 81 of the eighth embodiment is formed by arranging a plurality of pillar-shaped cells 70, in which polymer molecules 79 are obliquely laminated in the same direction so as to selectively reflect infrared light IR4, in parallel to one another along the grid sheet 81.

The infrared diffusion layer 85 includes many cells 70, of which orientation of the spiral axis SA4 is not arranged perpendicular to the grid sheet 81. The infrared light IR1 irradiated from the IR-LED is reflected in a reflection angle $\beta$ direction that is different from the incident angle $\alpha$ with respect to the grid sheet 81 by the polymer molecules 79 of the cells 70. Since the orientations of the spiral axes SA4 of adjacent cells 70 in the infrared diffusion layer 85 irregularly vary, the reflection light of the infrared light IR4 is diffusely reflected.

By diffuse reflection of the infrared diffusion layer 85, the lens of the scanner can receive reflection light, from the entire imaging area, of the infrared light IR4 irradiated from the IR-LED of the scanner.

By diffuse reflection of the infrared diffusion layer 85, the lens of the scanner can receive reflection light, from the entire imaging area, of the infrared light IR4 irradiated from the IR-LED regardless of the contact angle of the scanner with respect to the plane surface of the grid sheet 81. When the scanner is inclined and infrared reflection light from the area in the outer inclination direction lacks brightness, or, when infrared light is irradiated from outside of the scanner and infrared reflection light from the surrounding area of the imaging area lacks brightness, the illuminance of the IR-LED is set to increase. When the IR-LED irradiates infrared light for predetermined time at predetermined intervals, irradiation time may be made longer. As an alternative measure, electric current supplied to the IR-LED may be increased or the gain thereof may be increased upon imaging.

<Ninth embodiment>

(Infrared recursive reflection layer)

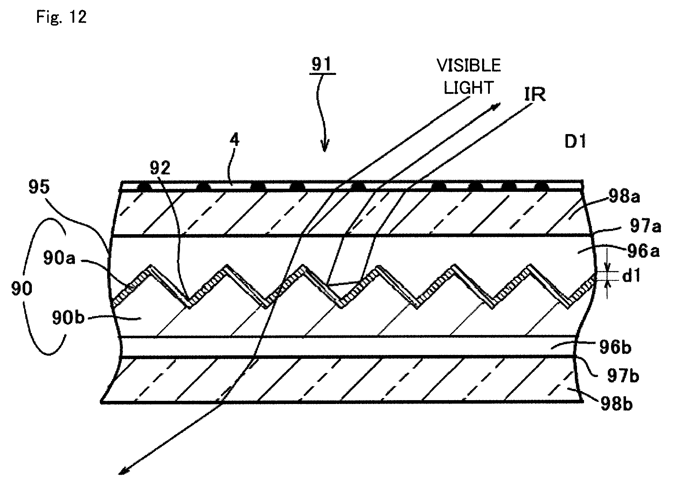

Fig. 12 is a section view schematically illustrating recursive reflection of an infrared recursive reflection layer of the grid sheet of the ninth embodiment of the present invention. As illustrated in Fig. 12, the infrared recursive reflection layer 95 of the grid sheet 91 of the ninth embodiment includes transparent base materials 98a and 98b, intermediate layers 96a and 96b in-between the base materials, and an optical functional layer 90, in-between the intermediate layers 96a and 96b, which has a surface layer 90a where trigonal pyramid-shaped concavities 92 having a right angle at the apex at the bottom are two-dimensionally arranged and a transparent body 90b, of which back surface is formed flat.

The concavities 92 of the optical functional layer 90 are formed in generally the same shape and size, the angles and sizes of the apexes may be minutely changed for each area or in a cycle. For example, the interval between the apexes of trigonal pyramid-shaped concavities 92 is defined as several tens to several hundred micrometers; the depth of the concavity 92, 10 to 100 micrometers; and, the depth dimension/plane dimension of the concavity 92, 0.5 or more.

The light transmissive body 90b is formed of a transparent resin material, for example, formed of thermoplastics resin, thermosetting resin, energy beam-curing resin, or the like. Particularly, favorable polymers for the light transmissive body 90b include polycarbonate, polymethyl methacrylate, polyethylene-terephthalate, and polyfunctional acrylate, or crosslinked acrylate, such as epoxy, and a compound of acrylic urethane and monofunctional and polyfunctional monomers. The light transmissive body 90b has a function as a support body supporting the optical functional layer 90 and is formed in a film shape, sheet shape, or plate shape of a predetermined thickness.

The surface layer 90a includes an optical multilayer film that reflects light of an infrared range and transmits light of a visible light range and is formed as a laminated film that alternately laminates a metal layer that has high reflectivity in the infrared region and an optical transparent layer or transparent conducting film that functions as an antireflection layer that has high refractive index in the visible region.

The metal layer with high reflectivity in the infrared region may contain, for example, a simple substance, such as Au, Ag, Cu, Al, Ni, Cr, Ti, Pd, Co, Si, Ta, W, Mo, Ge, or alloy including two or more kinds of these simple substances, as main components. Further, if an alloy is used as a material of the metal layer, the metal layer may contain AlCu, AlTi, AlCr, AlCo, AlNdCu, AlMgCu, AgPdCu, AgPdTi, AgCuTi, AgPdCagPdMg, AgPdFe, or the like.

The optical transparent layer contains a high dielectric, such as niobium oxide, tantalum oxide, titanium oxide, as a main component. The transparent conducting film contains, for example, zinc oxide, indium-doped tin oxide, or the like as a main component.

The surface layer 90a, without limitation to a multilayer film constituted of thin films made of inorganic materials, may be a film, in which a thin film made of a polymeric material and a layer where minute particles are scattered in polymers are laminated. The surface layer 90a is formed, on the light transmissive body 90b, with a generally even film thickness d1 that can reflect light of an infrared range.

The light transmissive body 90b is formed of a resin material that has a softening point at a temperature of 140°C or more, 150°C or more, or 170°C or more. The light transmissive body 90b has a loss modulus of $1.0 \times 10^{-6}$ Pa or more at 140°C and a frequency of 1 Hz. When the storage modulus is less than $1.0 \times 10^{-6}$ Pa, the surface layer 90a may be deformed with possible deterioration in retroreflective ability upon thermocompression bonding.

The intermediate layer 96a formed between the optical functional layer 90 and the transparent base material 98a embeds the surface layer 90a of the optical functional layer 90. As such, the intermediate layer 96a has a refractive index that is generally the same refractive index as the light transmissive body 90b so as to maintain clearness of the image transmitted through the grid sheet 91.

The intermediate layer 96a and intermediate layer 96b are formed of transparent thermoplastic resin. The intermediate layer 96b facilitates the light transmissive body 90b of the optical functional layer 90 to be bonded on the transparent base material 98b by a transparent adhesive layer 97b; and the intermediate layer 96a facilitates the surface layer 90a of the optical functional layer 90 to be bonded on the transparent base material 98a by a transparent adhesive layer 97a.

As a material of intermediate layers 96a and 96b, for example, a resin material, such as polymers or the like, which has a softening point at a temperature of 130°C or less, such as ethylene vinyl acetate (EVA), polyvinyl alcohol (PVA), and polyvinyl butyral (PVB), may be used.

As shown in Fig. 12, as the section of the surface layer 90a where concavities 92 of a triangular pyramid shape are two-dimensionally arranged shows rectangular equilateral triangles, the infrared light IR irradiated to the grid sheet 91 is transmitted through the dot pattern layer 4 and the transparent base material 98a and specularly reflected by one side of a concavity 92 of a rectangular equilateral triangle formed on the surface layer 90a of the optical functional layer 90 and specularly reflected again by the opposing slant face of the rectangular equilateral triangle.

As such, the infrared light IR irradiated from the IR-LED of the scanner to the grid sheet 91 is transmitted through the dot pattern layer 4, refracted at the transparent base material 98a and the intermediate layer 96a, and specularly reflected by the two sides that has a right angle of the rectangular equilateral triangle in-between, whereby the infrared light IR is recursively reflected with directivity to the IR-LED of the scanner which is the incident direction thereof. The angle of the concavity of the rectangular equilateral triangle is finely adjusted so that the lens adjacent to the IR-LED of the scanner can receive reflection light of the recursively reflected infrared light IR.

Whereas, the visible light is transmitted through the surface layer 90a and the light transmissive body 90b of the optical functional layer 90 and exited from the side of the transparent base material 98b. In this way, the display under the grid sheet 91 can be viewed.

According to the ninth embodiment, by recursive reflection of the infrared recursive reflection layer 95, the infrared light IR irradiated from the IR-LED of the scanner is returned and received by the lens of the scanner. As such, the scanner can receive reflection light, from the entire imaging area, of the infrared light IR irradiated from the IR-LED regardless of the contact angle of the scanner with respect to the plane surface of the grid sheet 91.

<Tenth embodiment>

(Infrared recursive reflection layer)

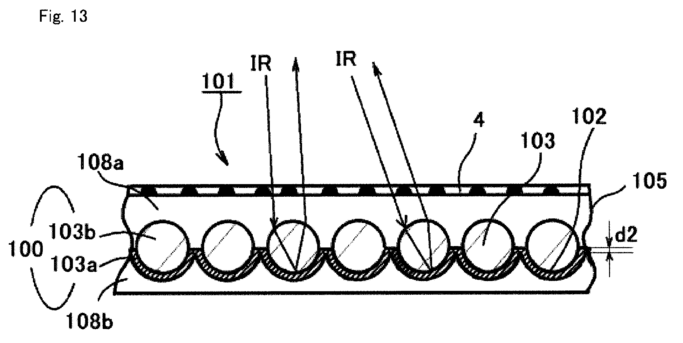

Fig. 13 is a section view schematically illustrating recursive reflection of an infrared recursive reflection layer of the grid sheet of the tenth embodiment of the present invention. As shown in Fig. 13, the infrared recursive layer 105 of the grid sheet 101 of the tenth embodiment includes a transparent resin binder material 108a, a transparent resin binder material 108b, and an optical functional layer 100 that has a bead layer 103b and a bead reflection layer 103a, where hemisphere-like concavities 102 that hold the beads 103 of the bead layer 103b are two-dimensionally arranged, in-between the transparent resin binder materials.

The bead 103 may be either glass or resin, as long as the bead has high sphericity and transparent, and fixed by the transparent resin binder material 108 in a manner in which the transparent resin binder material 108 embeds the whole bead 103. The transparent resin binder material 108 is formed of a transparent resin material such as, acrylic resin, epoxy resin, polyvinylidene fluoride resin, polyester, polyimide, polyolefin resin, vinyl chloride resin, and a blend material thereof without particularly limiting the material as long as the material of the transparent resin binder material 108 is transparent. The transparent resin binder material 108b has a function as a support body supporting the optical functional layer 100 and is formed in a film shape, sheet shape, or plate shape of a predetermined thickness.

The position of a focus in this bead layer 103b is determined by the size and the refractive index of the bead 103, the thickness of the bead layer 103b, and the refractive index of the transparent resin binder material 108. While the beads 103 are made of glass with a particle diameter of about 40 to 60 $\mu$m and the same size, larger-sized beads of 0.1 mm or more may also be used. The refractive index of the bead 103 is defined as a high refractive index of, for example, about 2.2 such that the focus point is located at the spherical surface of the bead 103.

The bead reflection layer 103a is formed of a vapor-deposited aluminum film, an electrodeposition coating film of silver or the like, or other material that has optical reflection characteristics. The bead reflection layer 103a is formed of a generally even film thickness d2 so that light of an infrared range can be reflected along the bead layer 103b.

The infrared light IR irradiated to the grid sheet 101 is transmitted through the dot pattern layer 4 and the transparent resin binder material 108a, refracted at the bead layer 103b, reflected off the surface of the bead reflection layer 103a that is located at a focus point, refracted again at the bead layer 103b, and recursively reflected with directivity in the incident direction thereof. The visible light is transmitted through the bead layer 103b and bead reflection layer 103a of the optical functional layer 100 and exited from the side of the transparent resin binder material 108b. In this way, the display under the grid sheet can be viewed.

As such, the infrared light IR irradiated from the IR-LED of the scanner to the grid sheet 101 is refracted at the bead layer 103b, reflected off the surface of the bead reflection layer 103a located at the focus point, and refracted again at the bead layer 103b, whereby the infrared light IR is recursively reflected with directivity in the incident direction to the IR-LED of the scanner. The distance between the bead 103 and the concavity 102 on the surface of the bead reflection layer 103a is finely adjusted so that the lens adjacent to the IR-LED of the scanner can receive the reflection light of the recursively reflected infrared light IR.

According to the tenth embodiment, by recursive reflection of the infrared recursive reflection layer 105, the infrared light IR irradiated from the IR-LED of the scanner is returned and received by the lens of the scanner. As such, the scanner can receive reflection light, from the entire imaging area, of the infrared light IR irradiated from the IR-LED regardless of the contact angle of the scanner with respect to the surface plane of the grid sheet 101.

<Eleventh embodiment>

Fig. 14 is a diagram showing an example where the grid sheet of the invention is used for a printed matter. Fig. 15 is a diagram schematically showing an enlarged view of the grid sheet of the eleventh embodiment of the invention used for a printed matter of Fig. 14. The printed matter of Fig. 14 is printed with a plurality of dots ■, ●, ○, □ with inks that absorb infrared light of different wavelengths, the size of the dots ■, ●, ○, □ of the grid sheet 111 is about 50 $\mu$m, which is hard to be seen by eyes. The grid lines in vertical and horizontal directions and diagonal lines in Fig. 15 are given for illustration only, and do not exist in a real printing surface. Further, the shapes of the dots ■, ●, ○, □ of Fig. 15 are only for illustration, and the shapes and colors of the dots are not limited to those of Fig. 15.

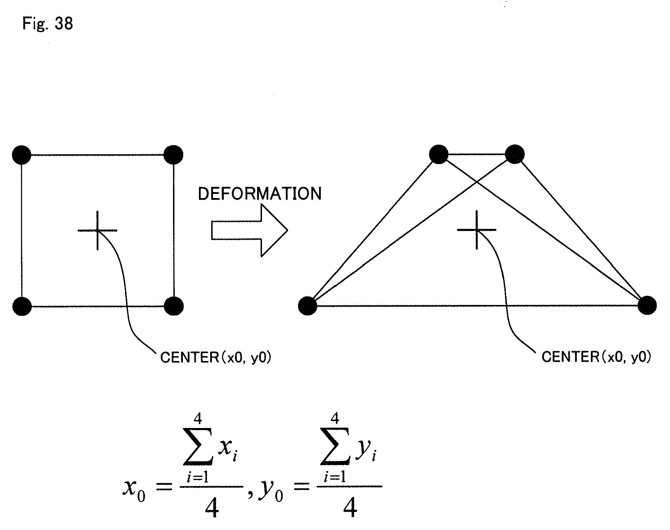

Further, in Fig. 15, the intersection of diagonal lines that connect reference dots at four corners is defined as a virtual grid point, and an information dot is arranged with this virtual grid point as reference. However, this only shows the state of the dot pattern when it is generated. In reality, if the scanner is inclined or the paper is curved, the dot pattern is deformed. Thus, the virtual grid point is not calculated by diagonally connecting the reference dots. Calculation of the virtual reference points will be described with reference to Fig. 38.

As shown in Fig. 15, for example, the dot pattern layer 114 of the grid sheet 111 is printed with reference grid point dots ■ at four corners forming a virtual grid, an information dot ● and an information dot ○ for recognition of information that is arranged at the end point of a vector expressed with the start point at a virtual grid point 112 at the center surrounded by the reference grid point dots ■ at four corners, and a key dot □ indicating a dot pattern of one block by shifting the four reference grid point dots ■ at the four corners of the block in a certain direction.

The information dot ● and the information dot ○ are expressed by the direction and length of a vector with the virtual grid point 112 as the start point. For example, 4 bits can be expressed by one reference grid by arranging information dots ● and ○, which are long and short distances from the virtual grid point 112, in eight directions by rotating the information dots ● and ○ 45 degrees by 45 degrees in a clockwise direction with the virtual grid point 112 as the center. Since one block is formed by 16 reference grids 113,4 bits x 16 dots = 64 bits can be expressed by one block of a dot pattern 1.

In Fig. 15, for example, two information dots ● and ○--an information dot ● that is printed with an ink that particularly absorbs infrared light IR1 that has a peak wavelength at around 840 nm and an information dot ○ that is printed with an ink that particularly absorbs infrared light IR1 that has a peak wavelength at least at around 860 nm--are provided at least within a reference grid 113.

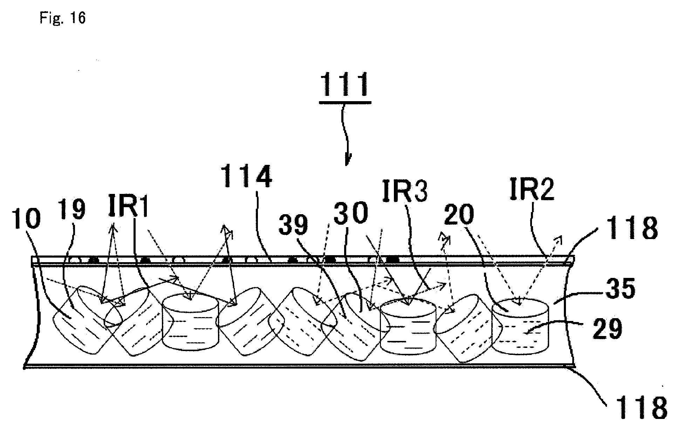

Fig. 16 is a section view schematically showing a dot pattern layer and an infrared diffusion layer of the grid sheet of the eleventh embodiment of the present invention. As shown in Fig. 16, the grid sheet 111 comprises a dot pattern layer 114 where information dots ● that absorb infrared light IR1 of a wavelength of 840 nm and information dots ○ that absorb infrared light IR1 of a wavelength of 860 nm are arranged in accordance with a predetermined rule and an infrared diffusion layer 35 of the third embodiment where the orientation angles of a plurality of cells 10, 20, 30 that selectively reflect infrared light of different wavelengths IR1, IR2, IR3 are irregularly varied and arranged. While IR1 to IR3 are used in this example, the infrared light wavelength may be further divided and infrared light of a wavelength that the cells 20 selectively reflect can be further selectively reflected.

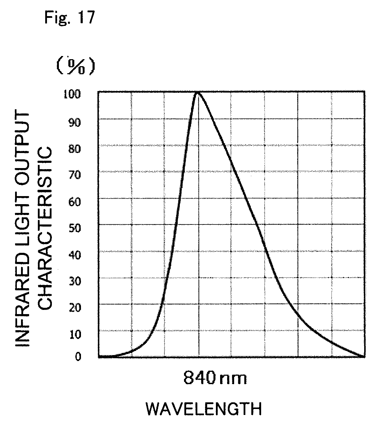

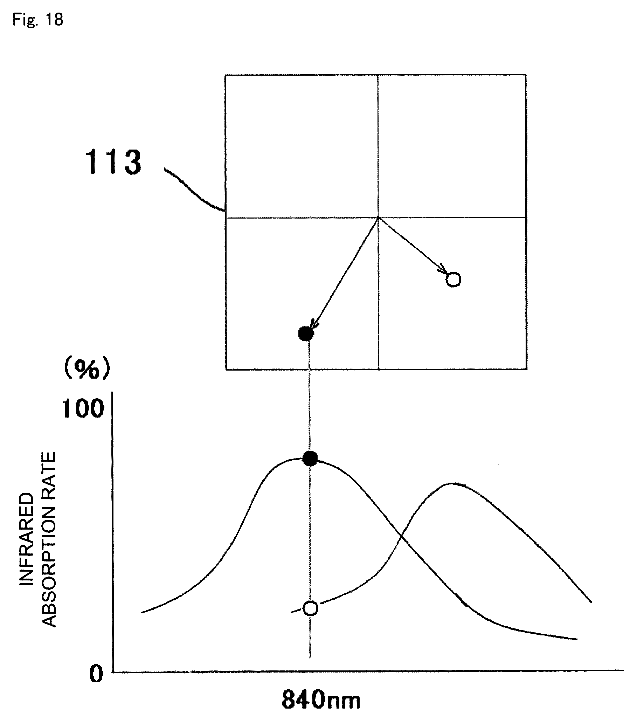

Fig. 17 is a diagram showing an example of output characteristics of IR-LED1 that irradiates infrared light to the grid sheet of the present invention. As shown in Fig. 17, the IR-LED1 has a sharp output peak at a wavelength of 840 nm. Fig. 18 is a diagram illustrating the infrared absorption rate of information dots when infrared light of 840 nm is irradiated from the IR-LED1 to reference grids.

When the infrared light IR is irradiated from the scanner to the reference grids 113, the information dots ● absorb a large amount of infrared light IR1 as the information dots ● are printed with an ink that contains a characteristic material that absorbs infrared light IR1, thus, the C-MOS sensor captures the image of the portion of the information dots. in thick black. Since the information dots ○ do not absorb infrared light IR1, the infrared light IR1 is transmitted through the information dots o and reaches the infrared diffusion layer 35 and diffusely reflected by the polymer molecules 19 of the cells 10 of the infrared diffusion layer 35, thus, the C-MOS sensor captures the image of the information dots ○ in thin black. That is, the information dots ○ absorb only a portion of infrared light IR1 and the rest of the infrared light is reflected and imaged in thin black. The information dots ● and the information dots ○ can be distinguished from the information dots ● using thresholds.

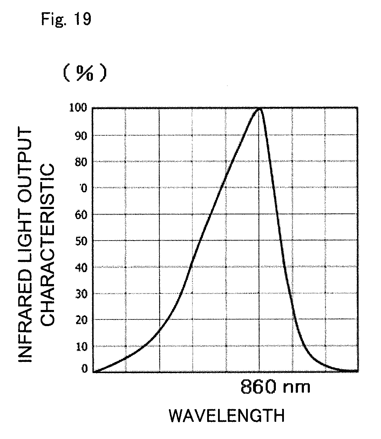

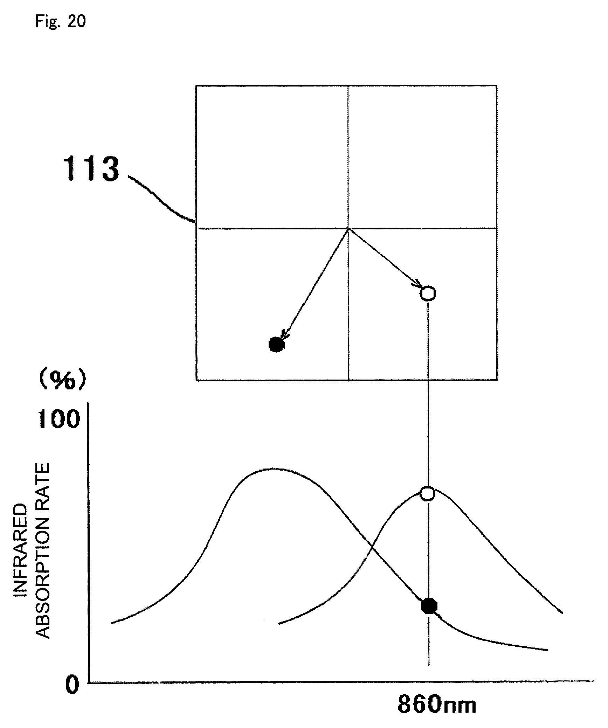

Fig. 19 is a diagram showing an example of output characteristics of IR-LED2 that irradiates infrared light to the grid sheet of the present invention. As shown in Fig. 19, the IR-LED2 has a sharp output peak at a wavelength of 860 nm. Fig. 20 is a diagram illustrating the infrared absorption rate of information dots when infrared light of 860 nm is irradiated from the IR-LED2 to reference grids.

When the infrared light IR2 is irradiated to the reference grids 113, since the information dots ● absorb only a portion of the infrared light IR2, the rest of the infrared light IR2 is transmitted through the information dots 34 and reaches the infrared diffusion layer 35, and the infrared light IR2 that is diffusely reflected by the polymer molecules 29 of the cells 20 of the infrared diffusion layer 35 is captured by the C-MOS sensor and imaged in thin black. The information dots ○ absorb a large amount of the infrared light IR2 as the information dots ○ are printed with an ink that contains a characteristic material that absorbs infrared light IR2, thus, the C-MOS sensor captures the image of the information dots ○ in thick black. That is, the information dots ● absorb only a portion of infrared light IR1 and the rest of the infrared light is reflected and thinly imaged. The information dots ● and the information dots ○ can be distinguished from the information dots ● using thresholds.

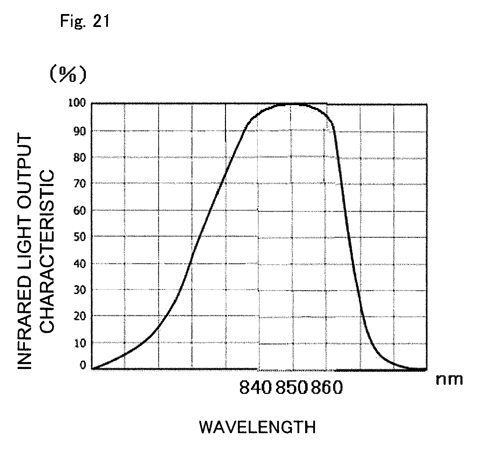

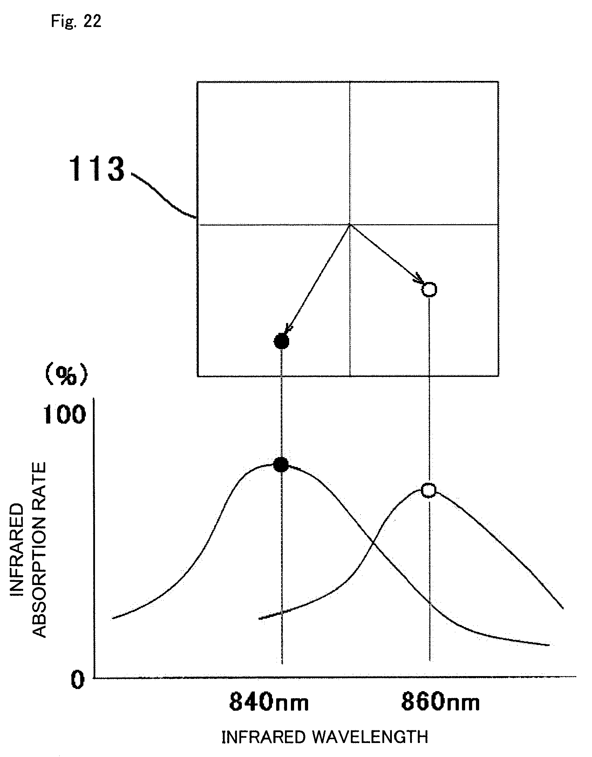

Fig. 21 is a diagram showing an example of output characteristics of IR-LED3 that irradiates infrared light to the grid sheet of the present invention. Fig. 22 is a diagram illustrating the infrared absorption rate of information dots when infrared light of a wavelength band from 840 to 860 nm is irradiated from the IR-LED3 to reference grids. While the IR-LED3 has an output peak in the wavelength band from 840 to 860 nm in Fig. 21, a plurality of IR-LED1, IR-LED2, and the like, each of which has an output peak at a single wavelength, may be combined to obtain the output characteristics of Fig. 21.

The information dots ● absorb infrared light IR1 as the information dots ● are printed with an ink that contains a characteristic material that absorbs infrared light IR1, while the information dots ○ absorb infrared light IR2 as the information dots ○ are printed with an ink that contains a characteristic material that absorbs infrared light IR2. The C-MOS sensor can acquire a captured image where information dots ● and information dots ○ are imaged in black.

According to the eleventh embodiment, a plurality of kinds of cells 10, 20, 30 that selectively reflect infrared light of wavelengths of IR1, IR2, IR3 are provided in the infrared diffusion layer 35, and an information dot ● that is printed with an ink that absorbs infrared light R1 and an information dot ○ that is printed with an ink that absorbs infrared light R2 are arranged within a reference grid 113 of the dot pattern layer 114. Using either infrared light R1 or infrared light R2, reference dots and information dots that are printed with an ink that absorbs a large amount of the infrared light of the wavelength are defined as true values and the other information dots are defined as false values. If the infrared light R1 or R2, of which wavelength is the same as the infrared absorption wavelength of the ink used for printing the information dots that are defined as true values, is irradiated to the dot pattern, the dots that absorb the irradiated infrared light are imaged in thick black, whereby the dot codes can be acquired from the information dots of true values. It should be noted that the information dots that are imaged in thin black may instead be defined as true values. It also should be noted that the reference dots may be imaged in thin black.

Further, as the wavelength of the IR-LED mounted on the scanner can be measured to determine the wavelength of the infrared light, infrared light R1 and infrared light R2 can be continuously irradiated to enhance security, and code values can be acquired from the information dots irradiated by the IR-LED of the wavelength for obtaining true values. It should be noted that infrared light R3 may also be used. To further enhance security, information dots imaged in thick black upon irradiation of infrared light R1, R2 (and infrared light R3) may be used to acquire code values, and information defined by a portion of the code values may define which wavelength is irradiated from the IR-LED to capture the image of each information dot, whereby the true values of the information dots are acquired to calculate the dot codes. As described above, an image of information dots, a portion or a whole of which are imaged in thin black, may instead be used as true values. Alternatively, only the user of the scanner may operate an equipped button to use the IR-LED to irradiate the infrared light of the wavelength for acquiring true values. In such a case, the scanner may continuously irradiate either or each of the infrared light R1, 2 to acquire the true values of the information dots, while the scanner may irradiate infrared light R3 in normal use.

That is, different information relating to a dot pattern is stored in the same continuous region by printing the dot pattern formed by a plurality of kinds of dots printed with inks that absorb infrared light of different wavelengths within the same continuous region of the grid sheet 111, whereby the information can be output depending on the wavelength of the infrared light that is irradiated to the grid sheet 111. Further, the grid sheet 111 may be a small piece of sticker, which may be used for security (authenticity determination) or traceability purposes. As such, the above sticker can be adhered to a medium or a structure formed of a material that specularly reflects or transmits infrared light, whereby only the dots can be accurately recognized. To make the dots completely invisible, the dots may be printed with an ink that absorbs infrared light or superposedly printed with an ink that is of a color, with which the superposedly printed dots cannot be distinguished, and that does not absorb infrared light. In the above security system, the dot pattern may be printed with a plurality of different infrared light absorbing inks on a medium that diffusely reflects normal infrared light without using a grid sheet.

Further, according to the eleventh embodiment, when infrared light that has peaks at a plurality of wavelength bands from infrared light R1 to R3 is irradiated, a plurality of images including information dots ● that absorb infrared light R1 and information dots ○ that absorb infrared light R2 can be simultaneously acquired.

While the information dots ● and information dots ○ have been described, the same goes to the reference grid point dots ■ and key dots □. The dots printed on the dot pattern layer 114 are not limited to the information dots ●, information dots ○, reference grid point dots ■, and key dots □. Any dots can be printed as long as the dots are printed with an ink that includes a characteristic material that absorbs infrared light.

It should be noted that the area where a plurality of dots ●, ○ that absorb infrared light of different wavelengths are printed is not limited to within a reference grid 113. Regardless of the size and shape of the area, as long as the area is continuous, the area may be printed with a plurality of dots ○, ● that absorb infrared light of different wavelengths.

[Twelfth embodiment]

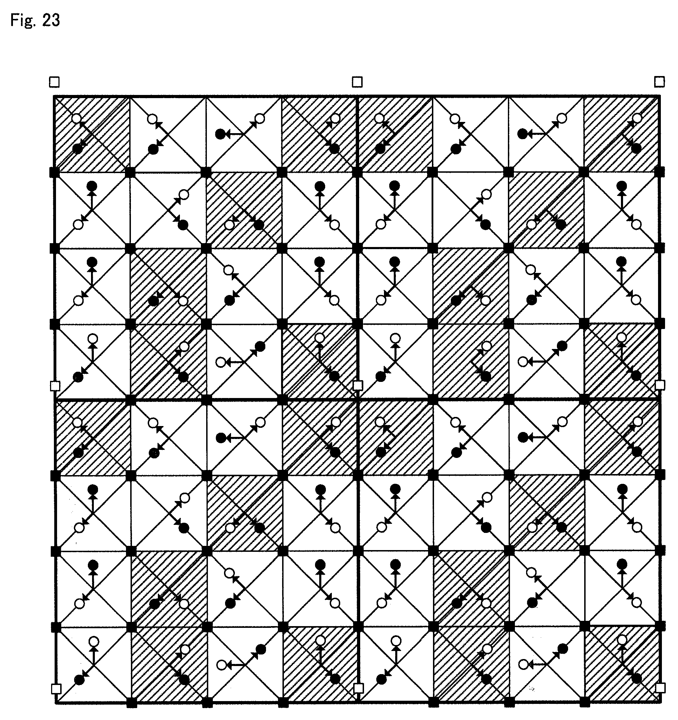

Fig. 23 is a section view schematically showing the grid sheet of the twelfth embodiment of the present invention used for the printed matter of Fig. 14. As shown in Fig. 23, the dot pattern layer 124 of the grid sheet 121 is printed with two information dots that absorb infrared light of different wavelengths for each grid area of the 16 grid areas.

A grid area where an information dot ● is printed with an ink that absorbs infrared light IR1 of a wavelength of 840 nm and an information dot ○ is printed with an ink that absorbs infrared light IR2 of a wavelength 860 nm is shown in white. A grid area where an information dot ○ is printed with an ink that absorbs infrared light IR1 of a wavelength of 860 nm and an information dot ● is printed with an ink that absorbs infrared light IR2 of a wavelength of 840 nm is hatched.

For example, if the information dots ● are defined as true values and the information dots ○ are defined as false values, when IR-LED1 that has output characteristics as shown in Fig. 17 irradiates the grid sheet 100, the C-MOS sensor images information dots ● in the white grid areas in thick black and information dots o in the hatched grid areas in thin black. When IR-LED2 that has output characteristics as shown in Fig. 19 irradiates the grid sheet 121, the C-MOS sensor images information dots ● in hatched grid areas in thick black and information dots ○ in white grid areas in thin black. That is, in determination of Boolean values, the dots imaged in thick black by irradiation from the IR-LED1 become true values in the white grid areas, while the dots imaged in thick black by irradiation from the IR-LED2 become true values in the hatched grid areas. If only the IR-LED1 is used, the dots imaged in thick black become true values in the white grid areas, while the dots imaged in thin black become false values in the hatched grid areas. It will be appreciated that, when only the IR-LED2 is used, the contrary is applied. It should be noted that security should be assured by making where white and hatched grid areas are arranged secret to those other than authorized users. On the other hand, when both IR-LED1 and IR-LED2 are used, either ink that absorbs a wavelength of 840 nm or a wavelength of 860 nm may be used for the reference dots ○ and key dots □. If only the IR-LED1 is used, an ink that absorbs infrared light of a wavelength of 840 nm is preferably used. An ink that absorbs infrared light of both a wavelength 840 nm and a wavelength 860 nm may instead be used for printing. It should be noted that, to further enhance security, while not shown, key dots Δ of false values may be printed with an ink that absorbs infrared light of a different wavelength than key dots □ of true values and arranged around reference dots ■, preventing accurate recognition of the direction and area of the dot pattern.

If IR-LED3 with output characteristics as shown in Fig. 21 is used to irradiate the grid sheet 121, the C-MOS sensor images the reference dots ■, key dots □, and information dots ●, ○ all in black. Using the IR-LED3 in combination with the IR-LED1 or IR-LED2, true information dots that are imaged in thin black can be imaged in thick black and, thus, the positions can be correctly recognized.

According to the twelfth embodiment, when a plurality of kinds of cells 10, 20, 30 that selectively reflect infrared light of wavelengths IR1, IR2, IR3, at least any one of which is different, are provided on the infrared diffusion layer 35 of the grid sheet 121, and the grid sheet 121 is irradiated by IR-LED that irradiates infrared light of a different wavelength than the infrared light of wavelengths reflected by the cells 10, 20, 30, the whole area does not reflect infrared light and is imaged in black. Thus, to image only the dots in black and other areas in white, the wavelength of infrared light absorbed by an ink used for printing dots and the wavelength of infrared light irradiated by IR-LED need to be included in the wavelengths of infrared light that is reflected by the cells 10, 20, 30. That is, by printing a dot pattern formed by a plurality of kinds of dots that absorb infrared light of a different wavelength for each different grid area of the grid sheet 121, information can be protected by disabling output of information relating to the dot pattern when the wavelength of the infrared light absorbed by the area printed with the dot pattern and the irradiated infrared light do not match.

If reaction can be changed using a plurality of infrared wavelengths as described above, when information dots that absorb infrared light of a different wavelength are arranged for each grid, different information can be acquired by irradiation of IR-LED of a corresponding wavelength.

Further, according to the twelfth embodiment, as infrared light that has peaks at a plurality of wavelength bands from infrared light R1 to R3 is irradiated, a plurality of images including information dots ● that absorb infrared light R1 and information dots ○ that absorb infrared light R2 can be simultaneously acquired.

It should be noted that the area, in which a plurality of different kinds of dots ●, ○ are printed, is not limited to a grid area. Regardless of the size and shape of the area, dots that absorb infrared light of a different wavelength may be printed for each block.

In the above security system, the dot pattern may be printed with a plurality of different infrared light absorbing inks on a medium that diffusely reflects normal infrared light, instead of using a grid sheet.

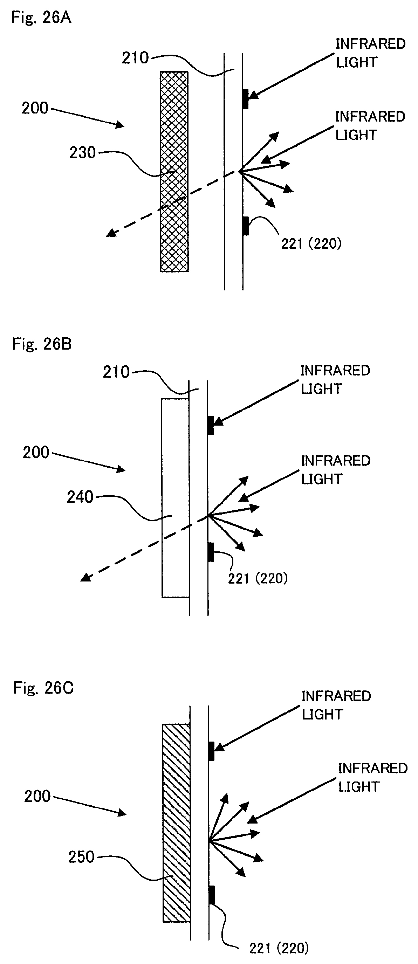

[Thirteenth embodiment using Figs. 26A to 26C]

The thirteenth embodiment will be described with reference to Figs. 26A to 26C.

The feature of the thirteenth embodiment is that a dot pattern 220 is printed on the dot pattern reading surface of the diffuse reflection sheet 210 that has a diffuse reflection layer.

Fig. 26A is a diagram where a display 230 is arranged as a medium on the opposite side (hereinafter, referred to as "back surface") of the dot pattern reading surface of the diffuse reflection sheet 210. Fig. 26B is a diagram where a transparent medium 240, such as glass, as a medium is arranged on the back surface side. Fig. 26C is a diagram where a print medium 250, such as paper, as a medium is arranged on the back surface side.

It should be noted that, in Figs. 26A and 26B, "200" indicates an information input assistance sheet (also referred to as a grid sheet) and "221" indicates a dot.

It should be noted that, while not shown, diffuse reflection is actually performed by each cell within a diffuse reflection sheet 210.

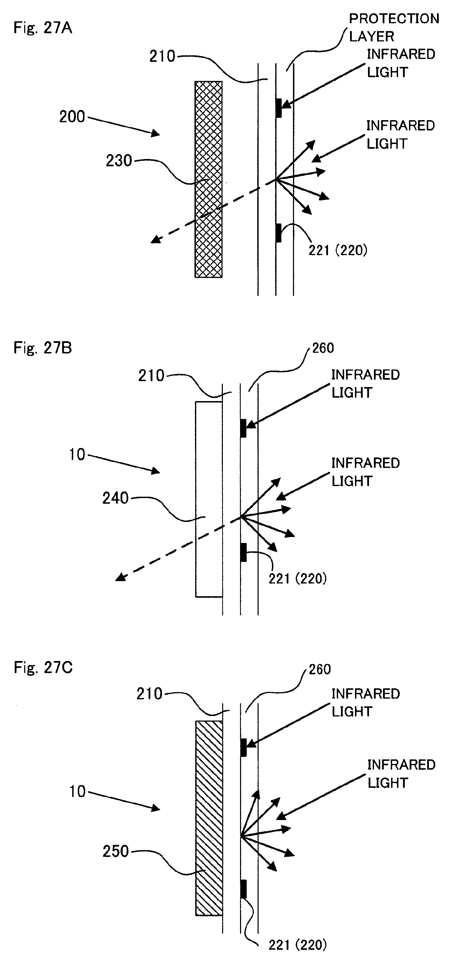

[Fourteenth embodiment using Figs. 27A to 27C]

The fourteenth embodiment will be described with reference to Figs. 27A to 27C.

The feature of the fourteenth embodiment is that a protection layer 260 is arranged for protecting dots 221 on the front side of the dot pattern reading surface of the diffuse reflection sheet 210 that includes a diffuse reflection layer.

Fig. 27A is a diagram where a display 230 is arranged as a medium on the opposite side (hereinafter, referred to as "back surface") of the dot pattern reading surface of the diffuse reflection sheet 210. Fig. 27B is a diagram where a transparent medium 240, such as glass, as a medium is arranged on the back surface side. Fig. 27C is a diagram where a print medium 250, such as paper, as a medium is arranged on the back surface side.

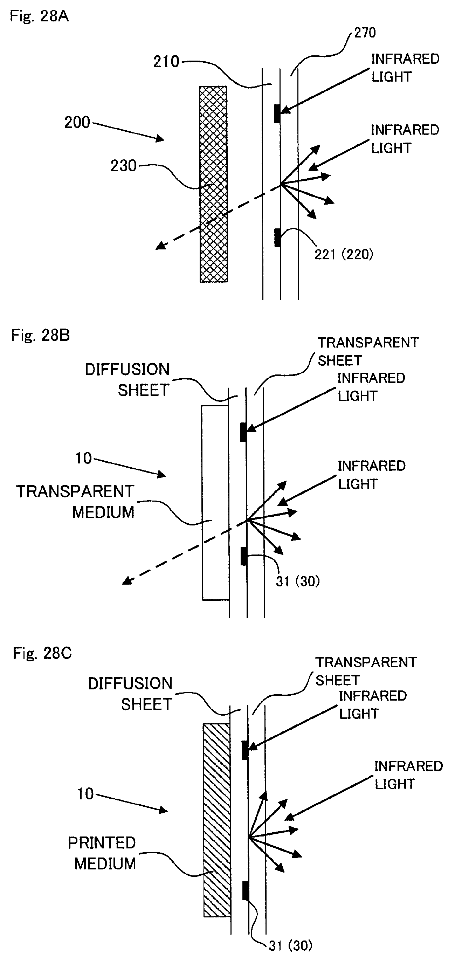

[Fifteenth embodiment using Figs. 28A to 28C]

The fifteenth embodiment will be described with reference to Figs. 28A to 28C.

The feature of the fifteenth embodiment is that a dot pattern 220 is printed on the opposite surface (hereinafter, referred to as "back surface") of the dot pattern reading surface of the transparent sheet 270.

According to the fifteenth embodiment, by printing the dot pattern 220 on the back surface of the transparent sheet 270, the transparent sheet 270 can function as a protection layer for protecting the dots 221.

Fig. 28A is a diagram where a display 230 is arranged as a medium on the back surface side of the transparent sheet 270 via the diffuse reflection sheet 210. Fig. 28B is a diagram where a transparent medium 240, such as glass, is arranged as a medium on the back surface side via a diffuse reflection layer 210. Fig. 28C is a diagram where a print medium 250, such as paper, is arranged as a medium on the back surface side via the diffuse reflection layer 210.

[Fifteenth embodiment using Figs. 28A to 28C]

The fifteenth embodiment will be described with reference to Figs. 28A to 28C.

The feature of the fifteenth embodiment is that an information input assistance sheet 200 is adhered to or placed on a predetermined medium surface of a display 230 (medium) of the display device, for example, on the display surface or in the vicinity of the medium surface.

It should be noted that, while a display device for PC 290 is illustrated as an example as shown in Figs. 28A to 28C without limitation, a display or a touch screen (touch panel) of a laptop PC, a tablet PC, a TV, a mobile telephone, a smartphone, and a variety of electric devices may be considered.

The optical reading device 280 reads the dot pattern in or out of contact with the dot pattern reading surface side of the transparent sheet.

The optical reading device 280 is connected wiredly or unwiredly with an information processing device, such as PC 290, via a USB cable.

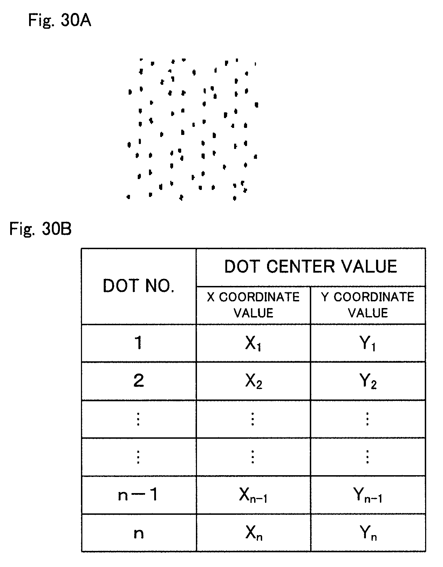

[Description of Figs. 30A and 30B]

Figs. 30A and 30B are explanatory diagrams for describing dots. Fig. 30A is a photograph of a read 256-tone image. Fig. 30B is a table of central coordinate values that are acquired from dots of a binary image. According to this table, information (code values) are decoded by decoding means.

<Description of dot pattern>

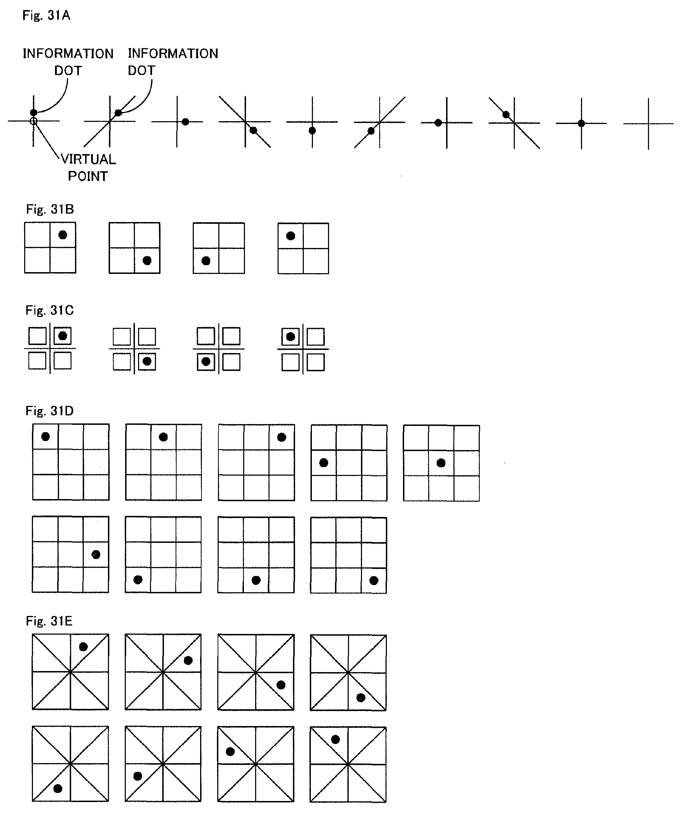

The following will describe an example of the dot pattern using Figs. 31 A to 45.

The embodiments of the dot pattern include the following examples:

It should be noted that the embodiments of the dot pattern are not limited to the following (1) to (4):

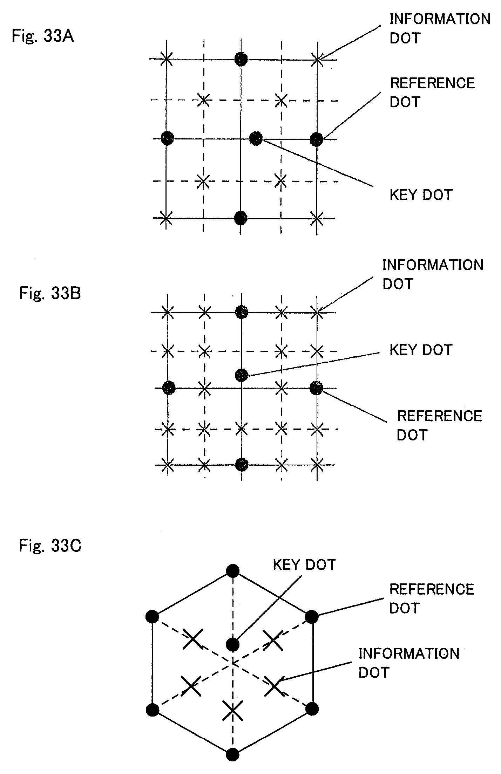

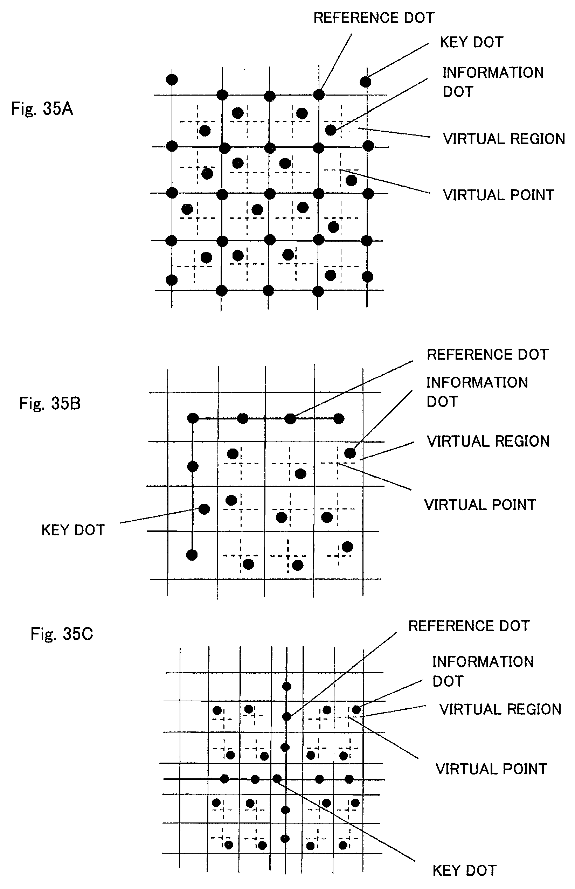

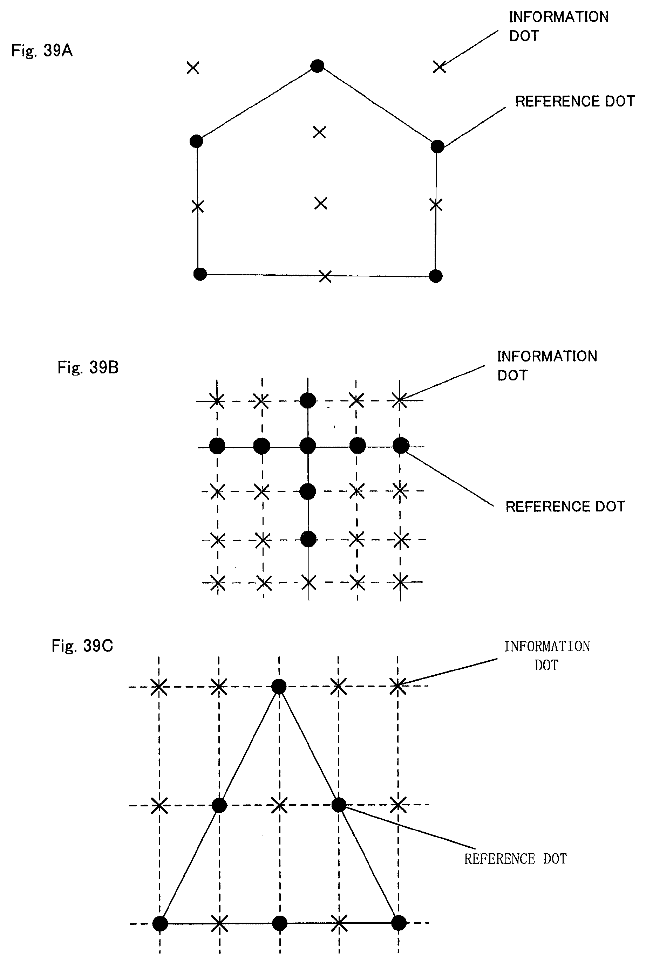

    (1) First example ("GRID0," Figs. 33A to 37B)
    (2) Second example ("GRID1," Figs. 35A, 36A, and 38)
    (3) Third example ("GRID5," Figs. 39A to 43C)

The information dots in the above first to third examples will be described using the following examples.

It should be noted that examples of the information dots are not limited to the following (5) and (6).

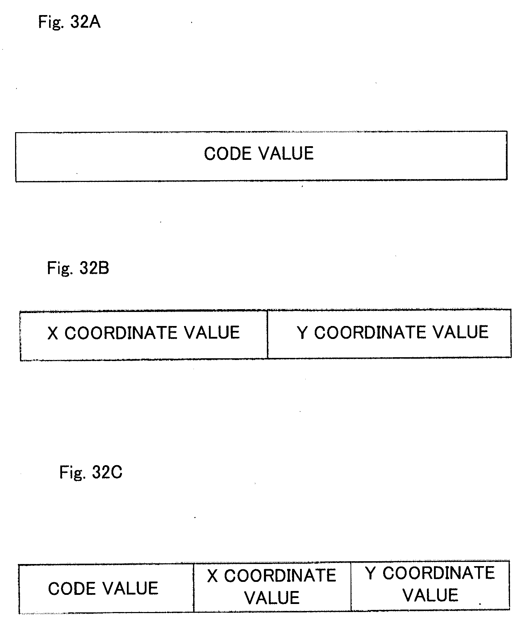

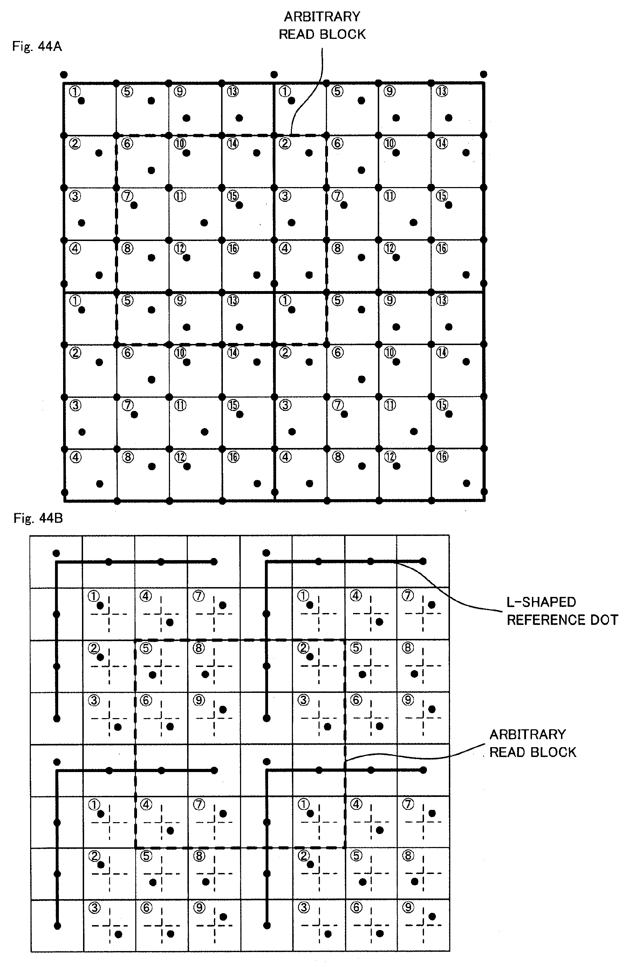

    (4) How information dots are arranged (Fig. 31 A to 31E)
    (5) Code allocation of information dot (Fig. 32A to 32C)
    (6) Reading a dot pattern (Figs. 44A to 45)

<How information dots shown in Figs. 31 A to 31E are arranged>

Information dots are arranged as shown in Fig. 31 A to 31 E.

It should be noted that the arrangement of information dots is not limited to the examples of Fig. 31 A to 31E.

That is, as shown in Fig. 31A, the amount of information can be increased by including, in addition to arranging an information dot above or below a virtual point, or left, right, or diagonal to the virtual point, a case of arranging no information dot, and cases of arranging and not arranging an information dot at a virtual point. In Fig. 31 B, an information dot is arranged in a total of four virtual regions of two rows and two columns. However, in consideration of erroneous recognition that might possibly occur when an information dot is arranged near the boundary, Fig. 31C is an example where virtual regions are arranged with certain intervals in-between. It should be noted that the information amount can be further increased by arranging a plurality of information dots within four virtual regions or by arranging no information dot.

In Fig. 31D, an information dot is arranged within a total of nine virtual regions of three rows and three columns. It should be noted that the information amount can be further increased by arranging a plurality of information dots within nine virtual regions or by arranging no information dot.

In Fig. 31 E, an information dot is arranged within a total of eight virtual regions that are made by connecting the middle points of a square and the diagonal lines thereof by straight lines or virtual lines. It should be noted that the information amount can be further increased by arranging a plurality of information dots within the eight virtual regions or by arranging no information dot.

While the virtual regions of Figs. 31B to 31E are rectangles or triangles, the virtual regions do not have to be in contact with each other as in the case of Fig. 31C and the virtual regions may be any shapes, such as circles or other polygons. Furthermore, the information amount can be increased by increasing the number of virtual regions. It should be noted that the arrangement of an information dot in virtual regions is made in the same way as the arrangement method of an information dot that is arranged by being displaced in a predetermined direction by a predetermined distance from a virtual point as shown in Fig. 31A. This is because, in creating print data, no matter what kind of virtual regions might be used for arranging information dots, the arrangement position should be determined by coordinate data that indicates a certain position, which is equivalent to calculating coordinate data for arranging an information dot by displacing it from a virtual point. Also, in reading dots, with any arrangement method, dots are recognized in an image that is obtained by capturing a dot pattern by setting a dot recognition determination region of a circle, a rectangle, or the like mainly at a plurality of arrangement positions where information dots are likely arranged and determining whether there are dots within the dot recognition determination region, which also can be said equivalent to the above information dot reading method.

<Code allocation of information dot in Figs. 32A to 32C>

The code allocation of an information dot is as shown in Figs. 32A to 32C.

That is, an information dot may be dedicatedly allocated to a "code value" such as a company code as shown in Fig. 32A; an information dot may be allocated to two data regions of "X coordinate value" and "Y coordinate value" as a code format as shown in Fig. 32B; or an information dot may be allocated to three data regions of "code value," "X coordinate value" and "Y coordinate value" as shown in Fig. 32C. If coordinate values are allocated in a rectangular region, data regions of "X coordinate value" and "Y coordinate value" may be different in order to decrease the data amount. Further, "Z coordinate value" may also be allocated, while not shown, in order to define height in the position coordinate. It should be noted that, if "X coordinate value" and "Y coordinate value" are allocated, as the values are position information, the coordinate values of X, Y coordinates increase by predetermined amounts in positive directions, thus, all dot patterns are not the same. Further, as evidenced from Figs. 32A to 32C, as the types of allocated codes increase, the dot recognition determination region becomes smaller, making the arrangement positions of information dots hard to be accurately recognized.

<First example ("GRID0"), Figs. 33A to 37B>

The first example of the dot pattern is referred to by an alias of "GRID0" by the Applicant.

The feature of "GRID0" is a use of a key dot for recognition of at least one of the range and direction of the dot pattern.

"GRID0" comprises the following components as shown in Figs. 33A to 37B.

(1) Information dot

The information dot is for storing information.

It should be noted that how an information dot is arranged is as shown in Fig. 31A to 31E, and the code allocation of an information dot is as shown in Figs. 32A to 32C.

It should be noted that the information amount can be increased by including a case of arranging no information dot and cases of arranging or not arranging an information dot at a virtual point.

(2) Reference dot

The reference dots are arranged at a plurality of positions that have been set in advance.

The reference dots are for identifying positions of virtual points or virtual regions, as will be described later.

(3) Key dot

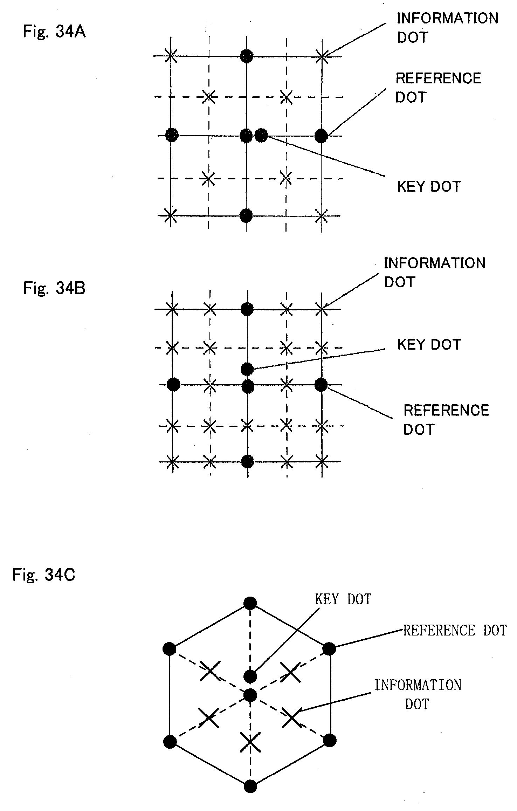

The key dot is arranged by displacing a reference dot or, as shown in Fig. 34A to 34C, arranged by adding a dot at a position that is displaced from the arrangement position of the reference dot. That is, if a key dot is arranged by displacing a reference dot, no reference dot is arranged at the original arrangement position of the reference dot as the reference dot is displaced. Thus, the key dot also plays a role of the original reference dot. The original position of the reference dot is preferably able to be anticipated from the positions of other reference dots. If a key dot is arranged additionally at a position displaced from the arrangement position of the reference dot, both reference dot and key dot are arranged in the vicinity of each other.

The key dot is for specifying a reference direction of an information dot with reference to reference dots and a virtual point or of an information dot that is arranged within reference dots and a virtual region. By defining this reference direction, information can be given and read in the direction of an information dot with reference to a virtual point. Further, the key dot can specify the range of a dot pattern that defines a piece of data with a plurality of information dots. As such, even if dot patterns are arranged up, down, left, and right of one another, a range of a dot pattern can be read and the data can be decoded.

(4) Virtual point or virtual region

The virtual point or the virtual region is specified by the arrangement of reference dots. As shown in Figs. 35A to 35C, if information is defined by at least any one of a distance and a direction from a virtual point, for the direction, information may be defined based on the above-described key dot that represents the direction of the dot pattern as a reference. For the distance, a distance between predetermined reference dots may be used as a reference. It should be noted that, if information is defined by arranging virtual regions, using the center or a representative point of a plurality of virtual regions as a virtual point for assigning a piece of information, the position of the virtual point is identified by the arrangement of reference points as described above, and the virtual regions may be defined by a distance and a direction from the virtual point. Further, the arrangement positions of all virtual regions may be directly identified by the arrangement of reference dots. It should be noted that, while the adjacent virtual regions may be coupled, virtual regions are preferably arranged with certain intervals in-between, as an information dot that is arranged near the boundary may possibly transmit misrecognition.

Figs. 33A to 33C show general examples of the dot pattern of "GRID0." Fig. 33A is an example of arranging reference dots in a generally plus sign shape. Fig. 33B is an example of increasing the number of arranged information dots. Fig. 33C is an example of arranging reference dots in a hexagon shape.

The general examples of the dot pattern are not limited to the generally plus sign shape or a generally hexagon shape as exemplified in Figs. 33A to 33C. Figs. 34A to 34C show variants of Figs. 33A to 33C, where a key dot is arranged additionally at a position displaced from the arrangement position of a reference dot. As the result, both reference dot and key dot are arranged adjacent to each other.

Figs. 35A to 35C show variants of the dot pattern of "GRID0." Fig. 35A is an example of arranging reference dots in generally square shapes. Fig. 35B is an example of arranging reference dots in a generally L-shape. Fig. 35C is an example of arranging reference dots in a generally cross shape or a generally plus shape.

It should be noted that the variants of the dot pattern are not limited to the generally square shapes, generally L shape, generally cross shape, or generally plus shape as exemplified in Figs 35A to 35C.

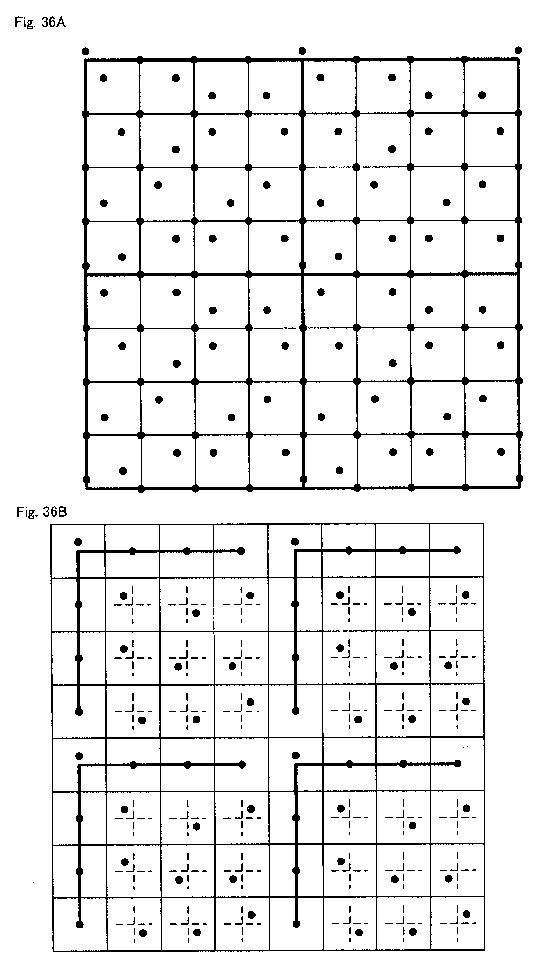

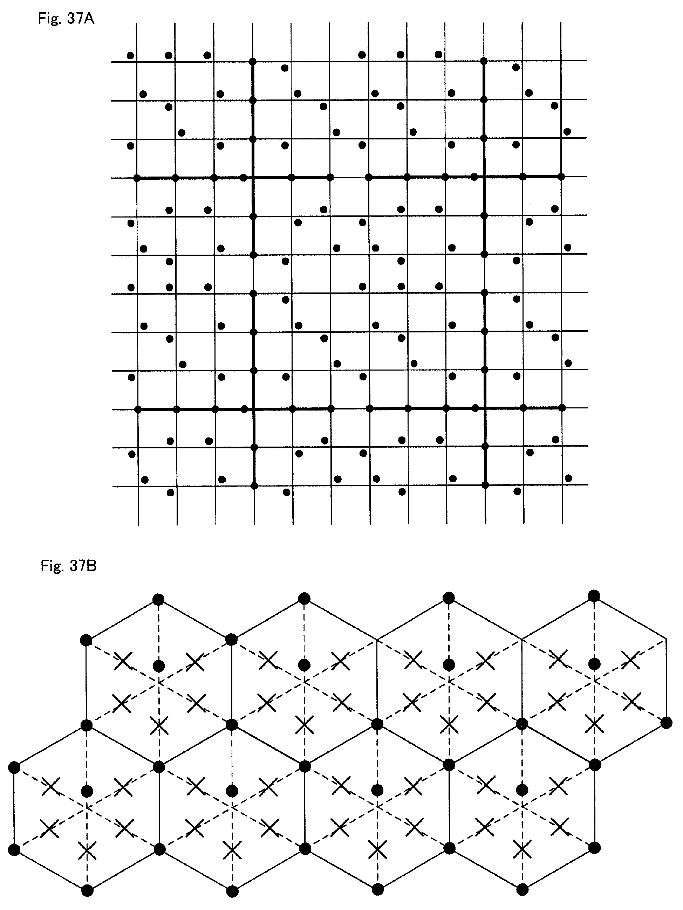

Figs. 36A to 37B show coupling examples and concatenation examples of the dot pattern of "GRID0." Fig. 36A shows a coupling example where a plurality of pieces of dot patterns in which reference dots are arranged in generally square shapes are arranged in contact to one another such that a portion of the reference dots is shared among the dot patterns. The condition of coupling is that the positions of dots on both sides of top and bottom and/or left and right are vertically and/or horizontally at the same positions in a piece of dot pattern. It should be noted that the dot patterns may be coupled only top and bottom to one another or left and right to one another. Fig. 36B shows a first concatenation example in which a plurality of pieces of dot patterns, in each of which reference dots are arranged in a generally L shape, are arranged independently from one another. Fig. 37A shows a second concatenation example in which a plurality of pieces of dot patterns, in each of which reference dots are arranged in a generally plus shape, are arranged independently of one another. It should be noted that concatenation refers to a method of arranging dot patterns top, bottom, left, and right of one another with predetermined intervals. Fig. 37B is a coupling example where a plurality of pieces of dot patterns, in each of which reference dots are arranged in a hexagon shape, are arranged adjacent to one another such that a portion of the reference dots is shared among the dot patterns.

Further, the coupling examples and the concatenation examples of the dot pattern are not limited to the arrangements exemplified in Figs. 36A and 36B and Figs. 37A and 37B.

<Second example ("GRID1")>

The second example of the dot pattern is referred to by an alias of "GRID1" by the Applicant.

"GRID1" is made by limiting the arrangement of the reference dots of "GRID0" as shown in Fig. 35A, which features that reference dots are arranged in rectangular shapes, for example, squares and rectangles, and that a virtual point is defined as the center of the surrounding four reference points. The center is, as shown in Fig. 38, calculated as the coordinate value that is obtained by dividing the coordinate values of four surrounding reference points by 4. In this way, even if the arrangement of the dot pattern is distorted in a captured image due to reading of the dot pattern by an inclined optical reading device, lens distortion, or deformity of a print medium where the dot pattern is formed, the arrangement of an information dot is accurately calculated in relation to the shifted arrangement of adjacent four reference dots, as the arrangement of the information dot shifts in the same way as the four reference dots, causing little decrease in the recognition rate. Needless to say, if an information dot is arranged apart from reference dots as in Figs. 35B and 35C, the arrangement position of the information dot may not be accurately read with possible misrecognition.

The drawings include a variant of Fig. 35A where reference dots are arranged in square shapes and a coupling example of the dot pattern of Fig. 36A where dot patterns are repeatedly arranged top, bottom, left, and right of one another and the circumference reference dots are overlapped.

It should be noted that, while reference dots are arranged in squares as shown in Fig. 35A, the reference dots may be arranged in rectangles without limitation. Further, while reference dots are coupled as shown in Fig. 36A, adjacent dot patterns may be arranged independently from one another with predetermined intervals without limitation.

<Third example ("GRID5")>

The third example of the dot pattern is referred to by an alias of "GRID5" by the Applicant.

"GRID5" uses "the way reference dots are arranged" instead of the key dot of "GRID0" for recognition of the range and direction of a dot pattern. To recognize the direction of a dot pattern by "the way reference dots are arranged," the dot pattern should be axially asymmetric so that the arrangement of reference dots does not be the same as the arrangement before rotation no matter how much the reference dots are rotated with any point as a center (excluding 360 degrees). Further, even if a plurality of pieces of dot patterns are coupled or concatenated by repeatedly arranging the dot patterns top and bottom and/or left and right of one another, the ranges and orientations of the dot patterns are needed to be recognized.

It should be noted that, even if a key dot is included as "GRID0," the range and direction of the dot pattern can be recognized by "the way reference dots are arranged" as a dot pattern of "GRID5" that has no key dot by having the key dot recognized as a reference dot.

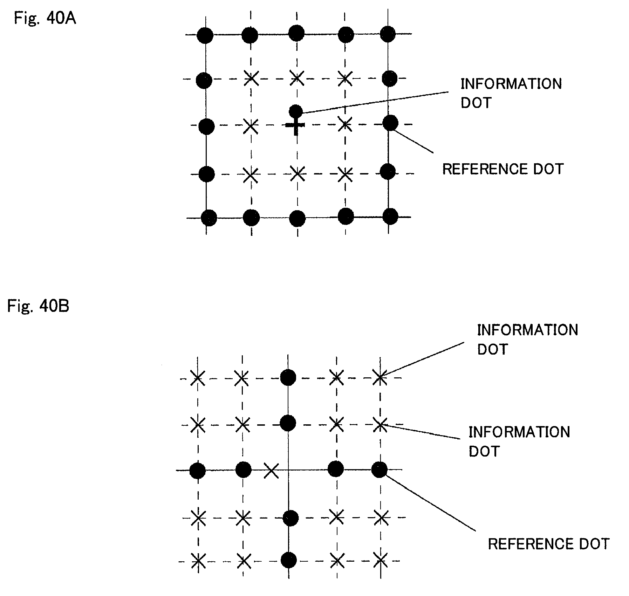

Further, as shown in Figs. 40A to 42C, as a particular example of "GRID5," "the way reference dots are arranged" can be used to specify only the range of a dot pattern, and the orientation of the dot pattern can be specified by the arrangement position of an information dot, that is, "the way a virtual point is arranged," the orientation of a predetermined information dot, or the arrangement rule thereof. In such a case, the dot pattern may be axially symmetrical in which the arrangement of reference dots become the same as the arrangement before rotation when the reference dots are rotated with an arbitrary point as a center (excluding 360 degrees). Further, even if a plurality of pieces of dot patterns are coupled or concatenated by repeatedly arranging the dot patterns top and bottom and/or left and right of one another, only the ranges of the dot patterns should be recognized. It should be noted that this example is referred to by an alias of "direction dot" by the Applicant.

Figs. 39A to 39C show general examples of the dot pattern of "GRID5." Fig. 39A shows an example where reference dots are arranged in a generally house shape that is asymmetric in a vertical direction. Fig. 39B is an example where reference dots are arranged in a generally cross shape that is asymmetric in a vertical direction. Fig. 39C is an example where reference dots are arranged in a generally isosceles triangle shape that is asymmetric in a vertical direction.

It should be noted that the general examples of the dot pattern are not limited to the generally house shape, generally cross shape or generally triangle shape as exemplified in Figs. 39A to 39C.

Figs. 40A and 40B show general examples of "direction dot" that defines the direction of a dot pattern. Fig. 40A arranges reference dots in a square shape in a manner surrounding information dots, and the information dot at the center thereof defines the orientation of the dot pattern as a "direction dot" by the displaced direction of the "direction dot." It should be noted that the other information dots are arranged in + and x directions. Fig. 40B arranges reference dots in a generally plus shape, and the "direction dot" at the center is arranged by being displaced in a certain direction, where the orientation of the dot pattern is defined by the displaced direction of the "direction dot." The arrangement of the "direction dot" that defines the orientation of the dot pattern, as shown in Figs. 40A and 40B, may be arranged by displacing the dot in any direction as long as the direction is predefined. Also, the other information dots may be defined in any manner with a distance and a direction from a virtual point.

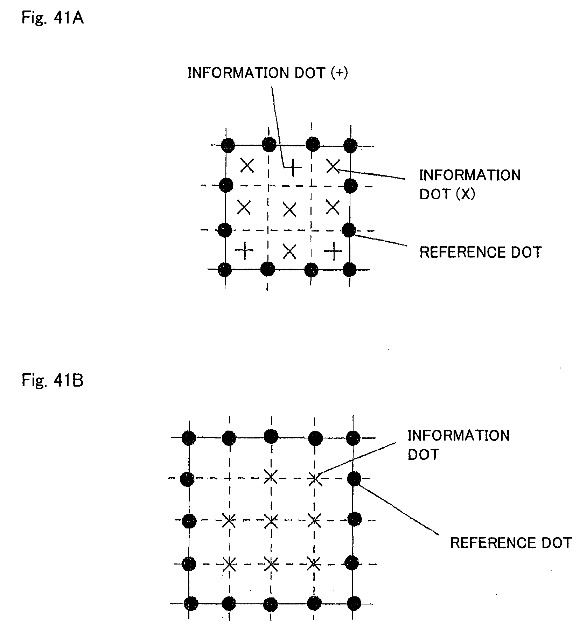

Figs. 41A and 41B show variants of "direction dot." Fig. 41A arranges reference dots in a square shape in a manner surrounding information dots, and the orientation of the dot pattern is defined by arranging information dots of + direction at three positions. It should be noted that other information dots are arranged in x direction. That is, the orientation of a dot pattern is defined by the way the "direction dot" is arranged, in which the arrangement rule of information dots is differentiated from the other information dots.

Fig. 41B is an example in which the orientation of the dot pattern is defined by not arranging an information dot, that is, "the way a virtual point is arranged." In other words, as the reference dots are arranged in a square shape, the "orientation" of the dot pattern cannot be specified by the arrangement of the reference dots. As such, the "orientation" of the dot pattern is determined by not arranging "reference dot" at one position of "virtual point" that is arranged within the region of reference dots that are arranged in a square shape, that is, "the way a virtual point is arranged." It should be noted that the "virtual point" where "reference dot" is not arranged may be any one of three positions in the upper row or three positions in the lower row.

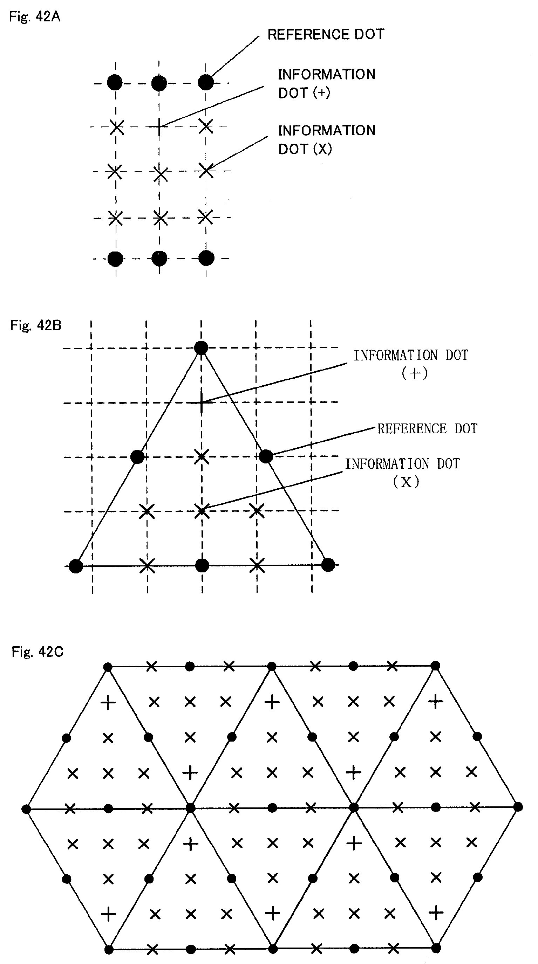

Figs. 42A to 42C show variants of "direction dot." In Fig. 42A, reference dots are arranged in a top row and a bottom row and information dots are arranged in-between, and the orientation of the dot pattern is defined by the arrangement of the information dot of + direction at a position other than the vertically center position. It should be noted that other information dots are arranged in x direction. That is, the orientation of the dot pattern is defined by the way the "direction dot" is arranged where the arrangement rule of the information dot is differentiated from the other information dots. In Fig. 42B, the orientation of the dot pattern is determined by arranging reference dots in an equilateral triangle shape and arranging information dots in a rectangle shape inside and outside of the triangle. Fig. 42C shows a coupling example of the dot pattern of Fig. 42B. Fig. 42C is a coupling example where a plurality of pieces of dot patterns, in each of which reference dots are arranged in an equilateral triangle shape, are arranged adjacent to one another such that portions of the reference dots are shared among the dot patterns. The condition of coupling is that the positions of dots on both sides of top and bottom and/or left and right are vertically and/or horizontally at the same positions in a piece of dot pattern. It should be noted that the dot patterns may be coupled only top and bottom to one another or left and right to one another. It should be noted that, in this example, information dots on the bottom side of the equilateral triangle are shared. As such, when dot patterns are coupled, not only reference dots but also information dots can be shared. However, information dots cannot be shared when a value varies for each dot pattern such as coordinate values.

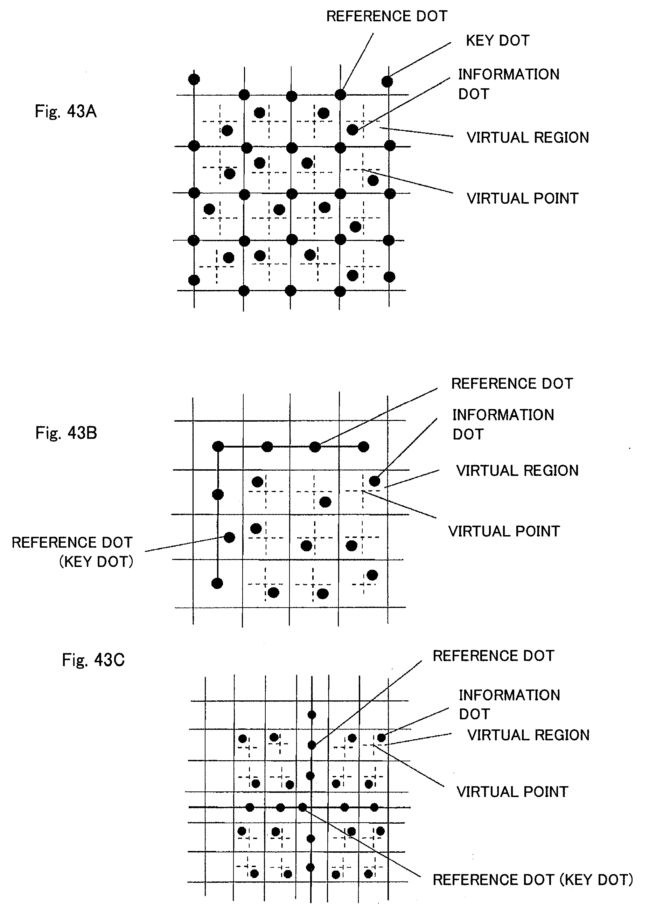

Figs. 43A to 43C show variants of the dot pattern of "GRID5." Fig. 43A shows an example where reference dots are arranged in a generally square shape that is asymmetric in a vertical direction. Fig. 43B is an example where a key dot is also used and reference dots are arranged in a generally L shape that is asymmetric in a vertical direction. Fig. 43C is an example where a key dot is used and reference dots are arranged in a generally cross shape that is asymmetric in a vertical direction.

It should be noted that the general examples of the dot pattern are not limited to the generally square shape, generally L shape, or generally cross shape that are asymmetric in a vertical direction as exemplified in Figs. 43A to 43C.

<Reading dot pattern>

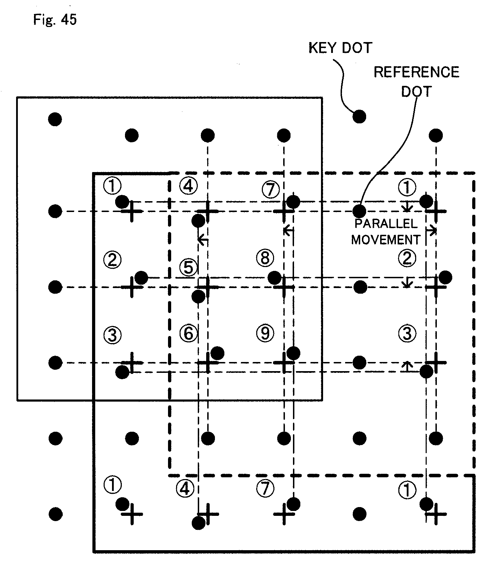

When the above dot patterns of "GRID0," "GRID1," "GRID5" define the same code values within a predetermined region and are arranged repeatedly top, down, left and right of one another, if an arbitrary region is read with a range of the same size of the range of the dot pattern as shown in Figs. 44A and 44B, information dots (1) to (16) ("circle 1 to circle 16" in Fig. 44A) or (1) to (9) ("circle 1 to circle 9" in Fig. 44B) that configure the original dot pattern are all included in the region, whereby all defined code values can be read. As such, as the arrangement of information dots can be determined based on the orientation and range of the dot pattern, the arrangement rule of the information dots that are configured as code values can also be identified. Further, as shown in Fig. 45, in the range of the dot pattern that is read in an arbitrary region, if either left or right information dot outside the range is read, the information dot and an information dot that is located at the other end have the same defined numerical value and are arranged at positions that are displaced by the same distance in the same direction from virtual points. The line segment that connects these two information dots forms a horizontal line. By moving this horizontal line in parallel, the horizontal line that passes through the virtual points can be accurately recognized. This parallel movement is, if there is a corresponding reference dot, equivalent to a distance of the movement of the reference dot from the current position until it reaches the horizontal line. Further, for a top to down direction, if a vertical line is recognized by a like procedure, by calculating the position of an intersection of the horizontal line and the vertical line, the virtual point can be accurately calculated. According to this method, even if a dot pattern is imaged by an inclined optical reading device and the arrangement of the dots is largely deformed, the virtual point can be accurately calculated and the numerical value indicated by the information dot can be accurately recognized.

<Description of calibration>

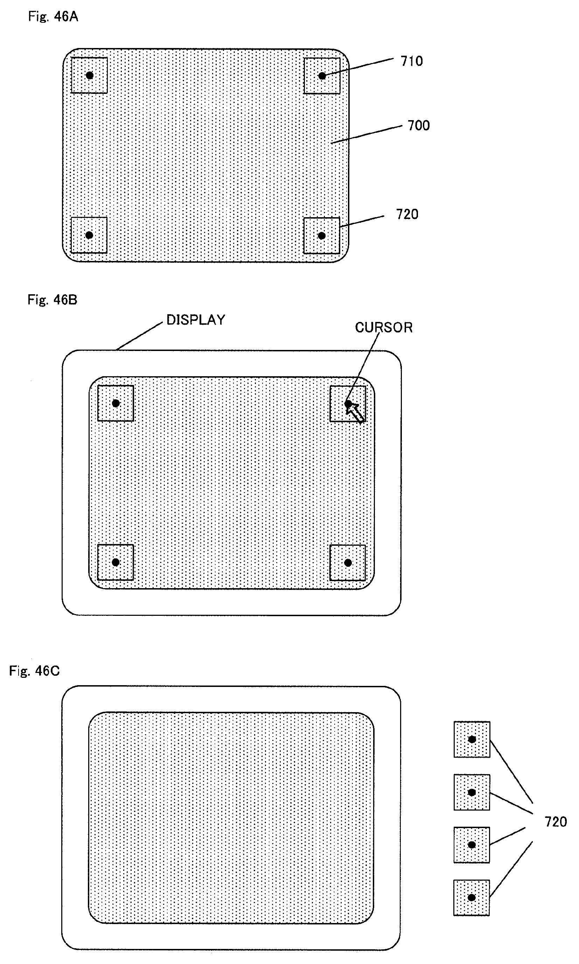

Figs. 46A to 55B are diagrams illustrating calibration that is performed when an information input assistance sheet 700 (grid sheet) is used.

[Embodiment 1 of calibration; Calibration of positional relation]

Embodiment 1 of calibration is calibration for appropriately associating the position of the information input assistance sheet 700 and the position of a medium 730 (a display 731 or a print medium 732).

To correctly reflect touching by a user on a display 731 or a print medium 732 (printed matter) as a medium 730 to processing corresponding to the touch position, the positional relation between the display 731 or print medium 732 (printed matter) and the information input assistance sheet 700 (grid sheet) should match. Thus, calibration for appropriately relating the coordinate system of the display 731 or the print medium 732 (printed matter) and the coordinate system of the information input assistance sheet 700 (grid sheet) are performed.

Figs. 46A to 47C are diagrams illustrating a case where calibration is performed on the display screen of the display 731.

Figs. 46 A to 46C are diagrams illustrating a case where calibration marks 710 are provided on the information input assistance sheet 700 (grid sheet).

As shown in Fig. 46A, the calibration marks 710 are provided near the four corners of the one surface side of the information input assistance sheet 700 (grid sheet). It should be noted that the calibration marks 710 are not necessarily provided near the four corners. The calibration marks may be provided at two or more corners or predetermined two or more positions.

Calibration can be performed by a variety of methods by matching the dot coordinate values $(x_{mi}, y_{mi})$ at predetermined four mark positions in the coordinate system of the information input assistance sheet 700 (grid sheet) to the coordinate values $(X_{ci}, Y_{ci})$ of the cursor positions in the coordinate system of the display screen data on the display 731. For example, by a plane projection conversion method, based on the dot coordinate values $(x_t, y_t)$ of the touch position of the optical reading device 740 (scanner) in the coordinate system of the grid sheet, a coordinate value $(X_t, Y_t)$ in the coordinate system in the display image data on the display can be calculated by the following conversion equation. It should be noted that the coordinate system in the display image data of the display is a coordinate system in the image storage medium (frame buffer) for causing the display to display an image, instead of the real measure coordinate system on the display.

$$X_t = (ax_t + by_tc)/(gx_t + hy_t + 1)$$

$$Y_t = (dx_t + ey_tf)/(gx_t + hy_t + 1)$$

Since four mark positions $(x_{mi}, y_{mi}, i = 1\text{-}4)$ and cursor positions $(X_{ci}, Y_{ci}, i = 1\text{-}4)$ can be determined by calibration, the positions are substituted to solve the simultaneous equation with eight unknowns to acquire a to h. In addition, an affine transformation equation and a Helmert transformation equation can be used for calibration of predetermined three or more positions. It should be noted that any of these calibration methods can be applied to calibration illustrated in Figs. 46A to 51B.

As shown in Fig. 46B, a user moves a cursor to a calibration mark 710 and left-clicks the mouse. The central processing unit of the personal computer recognizes the clicked position. Then, the coordinate system of the display 731 and the coordinate system of the information input assistance sheet 700 (grid sheet) are appropriately associated with each other. As such, calibration can be performed.

In Figs. 46A to 46C, calibration marks 710 are formed on detachable transparent stickers 720. After calibration, a user peels off the stickers from the information input assistance sheet 700 (grid sheet) as shown in Fig. 46C.

It should be noted that the calibration marks 710 may be either formed on the transparent stickers 720 or directly printed on the information input assistance sheet 700 (grid sheet). Further, the calibration marks 710 may be provided in a removable manner on the information input assistance sheet 700 (grid sheet) and may be removed from the information input assistance sheet 700 (grid sheet) after calibration.

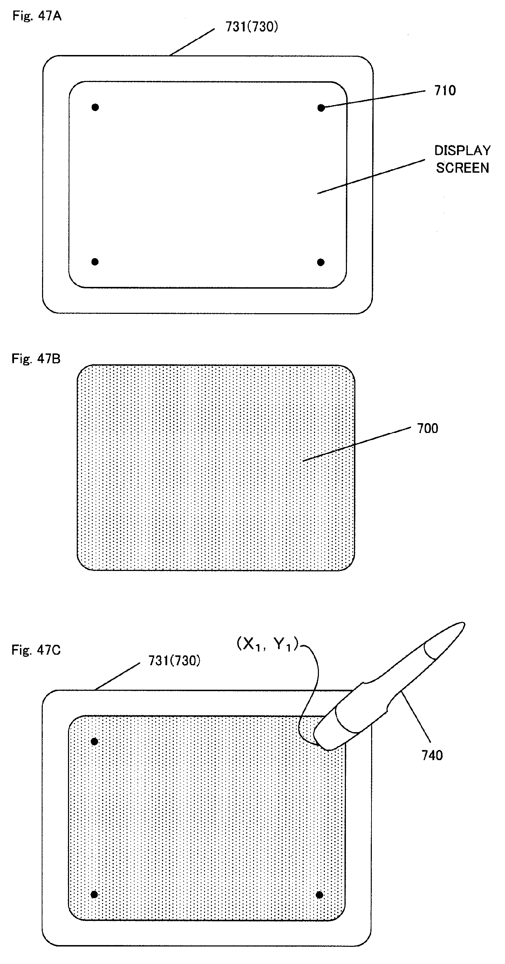

Figs. 47A to 47C are diagrams illustrating a case where calibration marks 710 are displayed on a display screen of the display 731.

As shown in Fig. 47A, calibration marks 710 are displayed near the four corners of the display 731. It should be noted that the calibration marks 710 are not necessarily displayed near the four corners. The calibration marks may be displayed at two or more corners or displayed at predetermined two or more positions.

A user touches the information input assistance sheet 700 (grid sheet) at the position where a calibration mark 710 is displayed as shown in Fig. 47C. The optical reading device 740 (scanner) reads the dot pattern on the information input assistance sheet 700 (grid sheet) and transmits the dot pattern to the personal computer (PC). The central processing unit of the personal computer (PC) recognizes the XY coordinates (X1, Y1) of the dot of the touch position from the transmitted dot pattern and performs calibration for appropriately associating the coordinate system of the display 731 to the coordinate system of the information input assistance sheet 700 (grid sheet).

It should be noted that it is preferable not to display the calibration marks 710 any more after calibration.

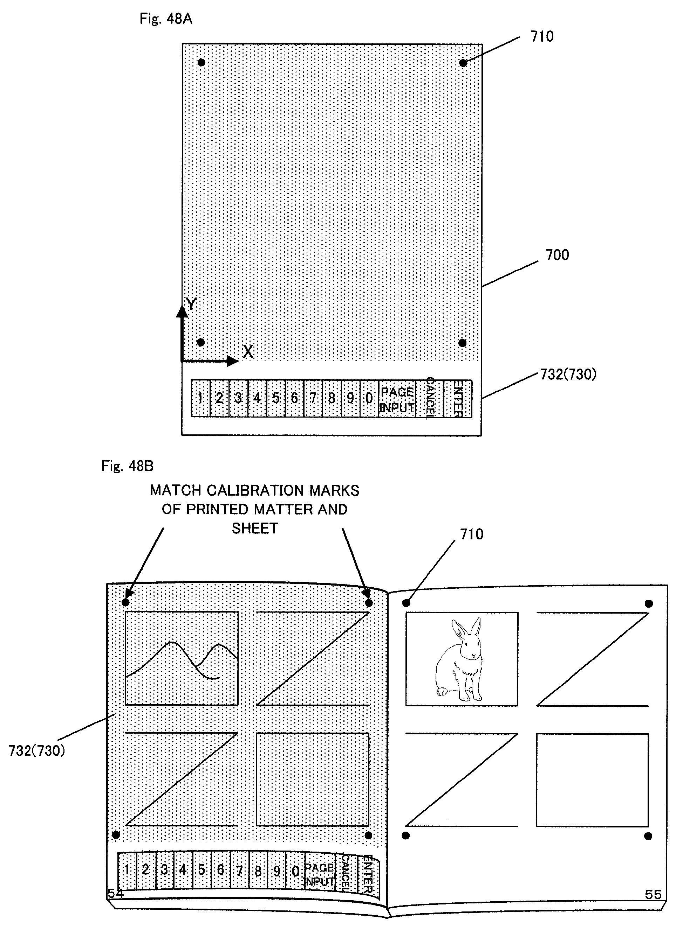

Figs. 48A to 49B are diagrams illustrating a case where calibration is performed for a print medium 732 (printed matter).

Figs. 48A and 48B are diagrams illustrating a case where calibration marks 710 are provided for both print medium 732 (printed matter) and information input assistance sheet 700 (grid sheet) provided for the print medium 732 (printed matter).

As shown in Fig. 48A, calibration marks 710 are printed near the four corners of the information input assistance sheet 700 (grid sheet) and the print medium 732 (printed matter). It should be noted that the calibration marks 710 are not necessarily printed near the four corners and may be printed at two or more corners. Alternatively, the calibration marks 710 may be printed at predetermined two or more positions.

A user can place the information input assistance sheet 700 (grid sheet) on the print medium 732 (printed matter) by matching the calibration marks 710 of both as shown in Fig. 48B. As such, calibration for appropriately relating the coordinate system of the print medium 732 (printed matter) and the coordinate system of the information input assistance sheet 700 (grid sheet) is performed.

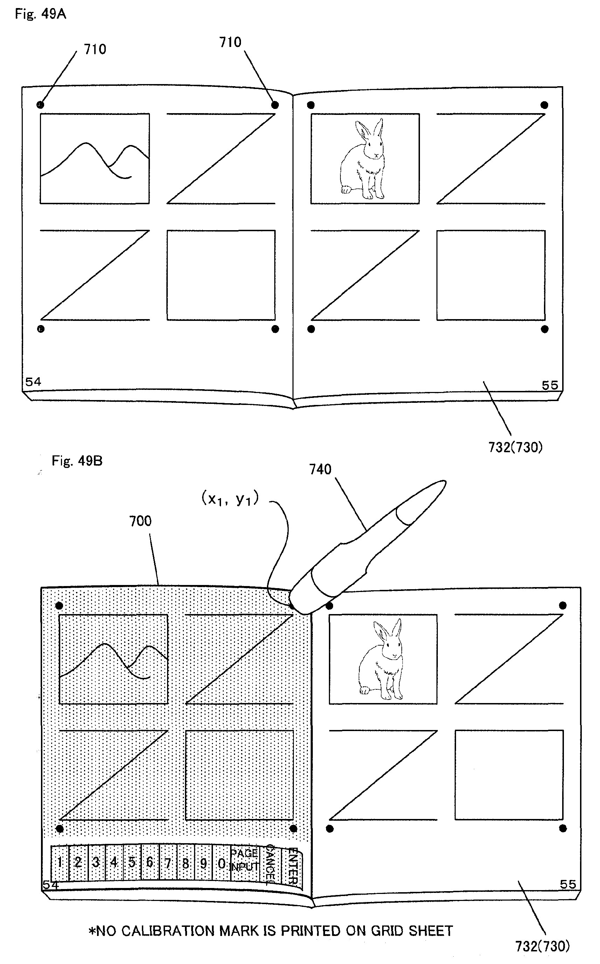

Figs. 49A and 49B are diagrams illustrating a case where calibration marks 710 are printed only on a print medium 732 (printed matter).

As shown in Fig. 49A, calibration marks 710 are printed near the four corners of the print medium 732 (printed matter). It should be noted that calibration marks 710 are not necessarily printed near the four corners, and may be printed at two or more corners. Alternatively, calibration marks 710 may be printed at predetermined two or more positions.

A user can place the information input assistance sheet 700 (grid sheet) on the print medium 732 (printed matter). Then, as shown in Fig. 49B, the optical reading device 740 (scanner) is matched with the marks. The optical reading device 740 (scanner) reads the dot pattern on the information input assistance sheet 700 (grid sheet) and transmits the dot pattern to the personal computer (PC). The central processing unit of the personal computer (PC) recognizes the coordinate values $(x_1, y_1)$ of the touch position from the transmitted dot pattern and performs calibration for appropriately associating the coordinate system of the print medium 732 (printed matter) with the coordinate system of the information input assistance sheet 700 (grid sheet).

Such calibration can match the positional relation between the coordinate positions of the information input assistance sheet 700 (grid sheet) and the image on the display 731 or the print medium 732 (printed matter) and accurately output information corresponding to the image and text touched by the user.

It should be noted that, in the above-described embodiments, when an information input assistance sheet 700 (grid sheet) is used for a display screen and the like, the information input assistance sheet 700 (grid sheet) may be used by being adhered to the display screen with adhesive, by being hooked on the upper portion of the display screen, or by other methods.

<When calibration mark is one>

Two or more calibration marks are required in the above calibration method.

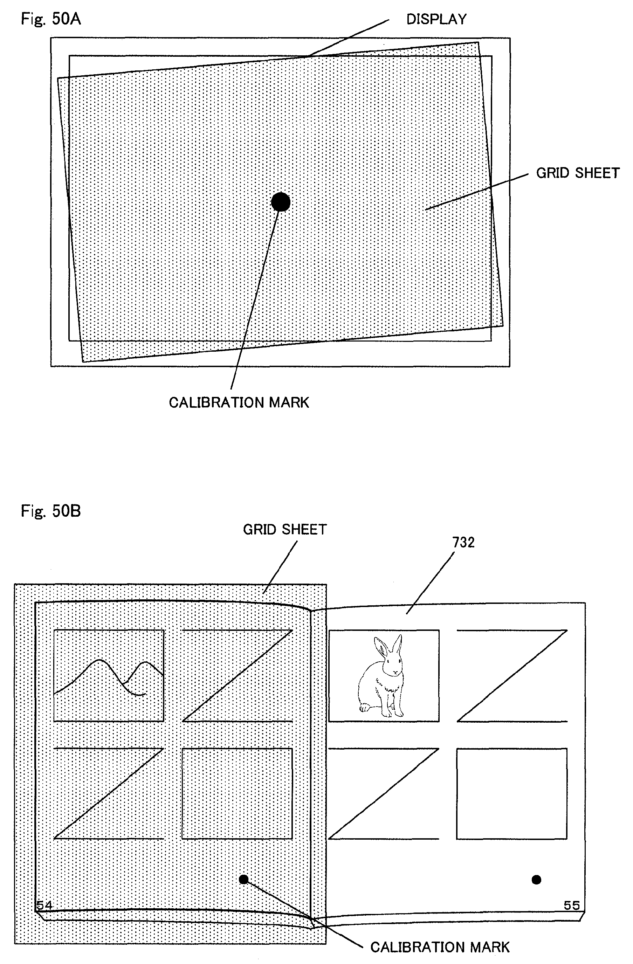

However, calibration can be performed even with only one calibration mark. The following will describe such a case with reference to Figs. 50A to 51B.

The dot coordinate values per unit length on the grid sheet in the coordinate system of the grid sheet and the coordinate values per unit length on the display in the coordinate system of the display image data on the display 731 or the coordinate values per unit length on the print medium in the print data coordinate system of the print medium 732 (printed matter) are stored in the storage means of the information processing device in advance. Further, when a calibration mark is touched by the optical reading device 740 (scanner), the calibration mark is touched in a predetermined axial rotation direction. In this way, calibration can be performed even with one calibration mark.

In Fig. 50A, a calibration mark is provided at a predetermined position of a display (the center in Fig. 50A). In Fig. 50B, a calibration mark is provided at a predetermined position of a printed matter (the lower right in Fig. 50B). A user touches the calibration mark by the optical reading device. Calibration can be performed, upon the optical reading device touching the calibration mark, by acquiring the rotation angle of the grid sheet in a predetermined axial rotation direction (that is, the rotation angle of the grid sheet with respect to the display).

Here, an equation for calculating the corresponding coordinate values $(X_t, Y_t)$ in the coordinate system of the display image data on the display by coordinate conversion of the dot coordinate values $(x_t, y_t)$ of a touch position in the coordinate system of the grid sheet is induced.

If the dot coordinate values per unit length on the grid sheet are defined as $\Delta x$, $\Delta y$, and the coordinate values per unit length on the display are defined as $\Delta X$, $\Delta Y$, the distortion coefficient of each coordinate axis becomes $\alpha_x = \Delta X/\Delta x$, $\alpha_y = \Delta Y/\Delta y$. It should be noted that, if the distortion rates of the axes are the same, $\alpha_x = \alpha_y$.

When the axial rotation direction of the optical reading device is matched to the upward direction of the display and the calibration mark is touched through the grid sheet, if the coordinate values of the calibration mark in the coordinate system of the display image data of the display are $(X_m, Y_m)$; the dot coordinate values of the touch position on the grid sheet are $(x_m, y_m)$; and the rotation angle of the grid sheet with respect to the optical reading device is $\theta_m$, the following equation can be acquired:

$$\begin{Bmatrix} X_t \\ Y_t \end{Bmatrix} = \begin{Bmatrix} X_m \\ Y_m \end{Bmatrix} + \begin{Bmatrix} \cos\theta_m & \sin\theta_m \\ -\sin\theta_m & \cos\theta_m \end{Bmatrix} \begin{Bmatrix} \alpha_x(x_t - x_m) \\ \alpha_y(y_t - y_m) \end{Bmatrix} \quad \cdots\cdots (1)$$

As such, a coordinate conversion equation in a case of only one calibration mark can be acquired. This coordinate conversion can also be used in a case where the grid sheet is placed on the printed medium 732 (printed matter).

When a grid sheet is placed over a larger display or printed matter than the grid sheet with calibration marks arranged at corners of the display or printed matter, the grid sheet cannot cover the all corners thereof, which makes accurate calibration impossible.

Using one calibration mark and the above equation, calibration can be accurately performed even when a grid sheet is smaller than a display or a printed matter.

<Other calibration methods>

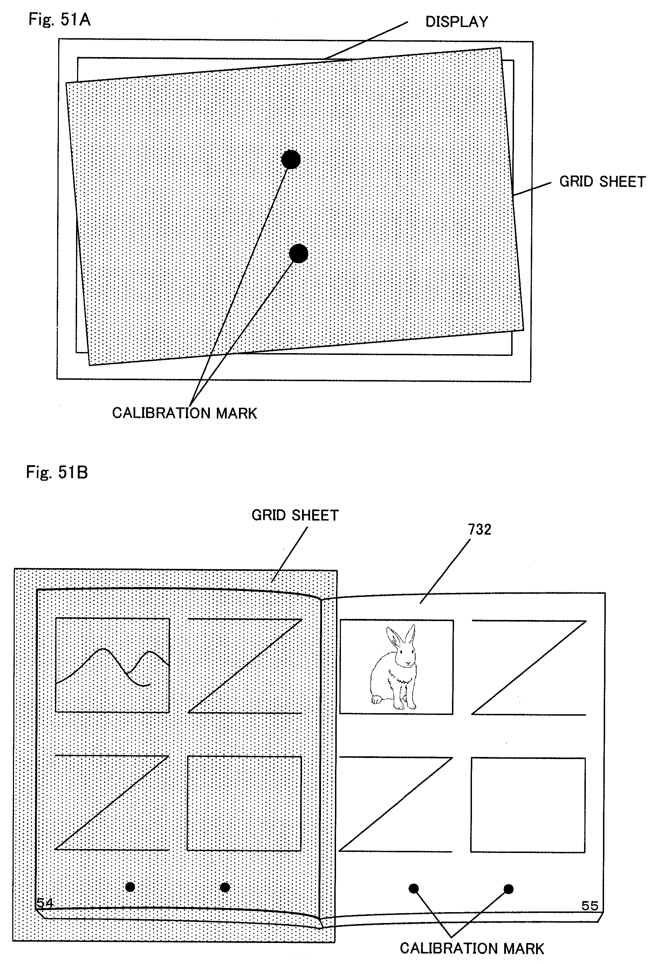

Figs. 51 A and 51B are diagrams illustrating still another method of calibration.

If the optical reading device touches a calibration mark without being matched to a predetermined rotational axis direction, accurate calibration cannot be performed. In such a case, accurate calibration can be performed by providing two calibration marks arranged in a horizontal or vertical direction on a display or a print medium, calculating the inclination of the grid sheet with respect to the display or print medium by the following equation, and performing the coordinate conversion by the above conversion equation with inclination $\theta_m$. Fig. 86A is a case where two calibration marks are arranged in a vertical direction on a display. Fig. 86B is a case where two calibration marks are arranged in a horizontal direction on a print medium.

When the dot coordinate values of predetermined two mark positions in the coordinate system of the information input assistance sheet 700 (grid sheet) are $(x_{m1}, y_{m1})$, $(x_{m2}, y_{m2})$, and the coordinate values of cursor positions in the coordinate system of the display image data of the display 731 are $(X_{c1}, Y_{c1})$, $(X_{c2}, Y_{c2})$, $\theta_m = (y_{m2} - y_{m1})/(x_{m2} - x_{m1})$.
If two mark positions are horizontally arranged, $\alpha_x = (X_{c2} - X_{c1})/(x_{m2} - x_{m1})$.
If two mark positions are vertically arranged, $\alpha_y = (Y_{c2} - Y_{c1})/(y_{m2} - Y_{m1})$.
It should be noted that, if the distortion rates of the axes are the same, $\alpha_x = \alpha_y = \alpha$ can be applied, and, the following equation can be obtained:

$$\begin{Bmatrix} X_t \\ Y_t \end{Bmatrix} = \begin{Bmatrix} X_{m1} \\ Y_{m1} \end{Bmatrix} + \begin{Bmatrix} \cos\theta_m & \sin\theta_m \\ -\sin\theta_m & \cos\theta_m \end{Bmatrix} \begin{Bmatrix} \alpha(x_t - x_{m1}) \\ \alpha(y_t - y_{m1}) \end{Bmatrix} \quad \ldots\ldots(2)$$

As such, a coordinate conversion equation in a case of two calibration marks can be acquired. This coordinate conversion can also be used in a case where the grid sheet is placed on the print medium 732 (printed matter).

It will be appreciated that, when the distortion rate is unidentified as in the case of $\alpha_x = \alpha_y$ in the above equation, the dot coordinate values $\Delta x$ and/or $\Delta y$ per unit length on the grid sheet used in the coordinate conversion equation may be stored in advance in the storage medium as information that is directly defined in the code values defined in association with the coordinate values in the grid sheet or as information corresponding to the code values.

[Embodiment 2 of calibration; Brightness calibration]

Embodiment 2 of calibration is calibration for adjusting brightness of the optical reading device 740 (scanner).

When a single scanner is used for both print medium 732 (normal printed matter) and grid sheet, the grid sheet and the normal printed matter have different infrared light reflection characteristics.

If the light amount of infrared light is determined based on the infrared reflection light that has appropriate brightness with a normal printed matter, dots often cannot be recognized due to the lack of infrared reflection light and, thus, the dot codes cannot be decoded. Thus, for each grid sheet or each of a variety of printed matters that is used with a single scanner, calibration for determining the light amount of infrared light based on the infrared reflection light of appropriate brightness is preferably performed in advance.

As such, to use calibration information (infrared light amount) that is determined in advance for each grid sheet or each of a variety of printed matters, each grid sheet or each printed matter need to be identified. This identification can be performed using a dot pattern printed on the grid sheet or printed matter.

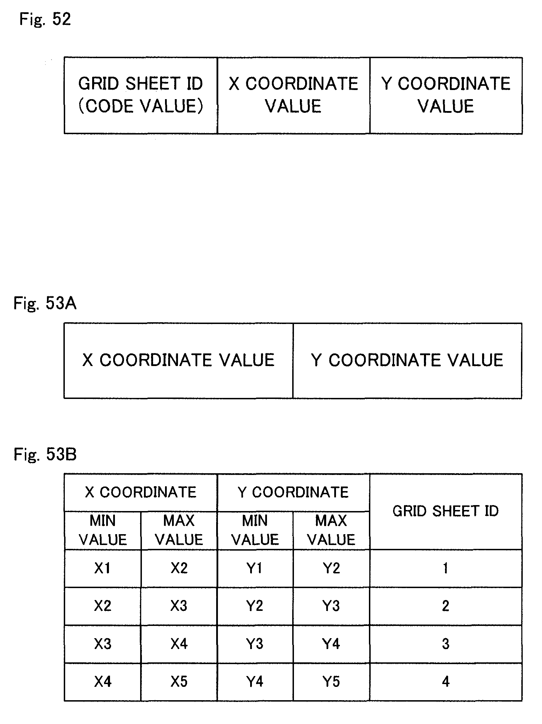

Fig. 52 is a dot code format when the XY coordinate values and code values are defined in a dot pattern. In such a case, the grid sheet ID, printed matter ID, or the like for specifying each grid sheet or printed matter is defined in the dot pattern as a code value.

Fig. 53A is a dot code format when only XY coordinate values are defined in a dot pattern. In such a case, the grid sheet ID, printed matter ID, or the like for specifying a grid sheet or a printed matter is defined by a table, as shown in Fig. 53B, provided in a memory within the scanner or the like. That is, an area that is formed in a unique coordinate range is determined for each grid sheet or printed matter to identify the grid sheet or printed matter. For example, if the coordinate range is an area formed in (X1-X2, Y1-Y2), the grid sheet ID is 1.

Further, as described above, when the infrared reflection light is lacking, such as when the scanner is inclined, real time calibration where the brightness of the captured image is measured each time and changed to an appropriate light amount in the next imaging may be performed. It will be appreciated the same can be applied to a case where dots cannot be recognized due to an excessive amount of infrared reflection light. Further, the light amount of infrared light may be controlled only by real time calibration without performing calibration in advance.

[Embodiment 3 of calibration; Calibration of size]

Embodiment 3 of calibration is calibration for adjusting the size of a grid sheet or print medium 732.

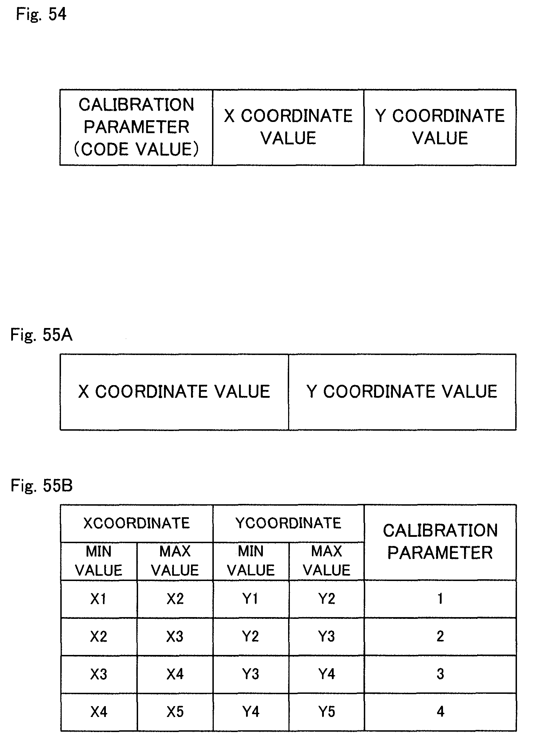

The dot pattern of the grid sheet or print medium 732 defines a calibration parameter as a code value as shown in Fig. 54. Calibration is performed upon the scanner touching predetermined positions (for example, four corners) of the grid sheet or the like with the scanner, as described in the above "Embodiment 1 of calibration." The size of the grid sheet or printed medium 732 is recognized by this calibration. When calibration is performed again after performing the calibration once, calibrated information is retrieved from calibration parameters defined in the dot pattern only by touching with the scanner.

It should be noted that a dot pattern may define only XY coordinate values as shown in Figs. 55A and 55B. In such a case, a calibration parameter can be defined by a table as shown in Fig. 55B. That is, an area that is formed by a unique coordinate range is determined for each grid sheet or print medium, and a calibration parameter assigned to each grid sheet or print medium can be identified. For example, if the coordinate range is an area formed by (X1-X2, Y1-Y2), the calibration parameter is 1.

As such, by providing a calibration parameter for each grid sheet or each print medium, calibration can be performed using the same scanner among mediums having different sizes, such as an electric black board attached with a grid sheet and a notebook printed with dot patterns. Further, this calibration is also superior in convenience, as once calibration is performed, calibration will not be needed any more.

<Supplementary description of embodiments>

The above-described embodiments embody the following technical idea.

(1) An information input assistance sheet of the present invention comprises a diffuse reflection layer that diffusely reflects at least light of a predetermined wavelength and is formed on a dot pattern reading surface, on which is formed a dot pattern that is read in or out of contact by an optical reading device, or an opposite surface of the dot pattern reading surface, the information input assistance sheet being placed on or adhered to a predetermined medium surface or near the medium surface, the optical reading device comprising: irradiation means that irradiates the light of the predetermined wavelength; a filter that transmits at least the light of the predetermined wavelength and blocks visible light; imaging means that images at least the light of the predetermined wavelength; and decoding means that decodes a dot pattern image that is imaged by the imaging means to a dot code, wherein dots of the dot pattern are printed on the dot pattern reading surface with an ink that has a characteristic that absorbs at least the light of the predetermined wavelength or the characteristic that absorbs the light of the predetermined wavelength and a visible light transmission characteristic, and the diffuse reflection layer is formed by arranging a directional reflection material so as to diffusely reflect the light of the predetermined wavelength, irradiated from the irradiation means, toward the dot pattern reading surface.

(2) Further, the directional reflection material is polymer molecules.

(3) Further, the diffuse reflection layer is formed by arranging a plurality of cells where the polymer molecules are laminated in different directions.

(4) Further, the diffuse reflection layer is formed by arranging a plurality of cells where the polymer molecules are laminated in the same direction, with varied orientation angles.

(5) Further, the diffuse reflection layer is formed by arranging the cells with regularly varied orientation angles.

(6) Further, the diffuse reflection layer is formed by arranging cells where the polymer molecules are oriented in parallel along the dot pattern reading surface at a predetermined ratio.

(7) Further, the diffuse reflection layer is formed by enclosing crushed cells in a solvent that has the same refractive index as the cells.

(8) Further, the polymer molecules and the cells are made of a directional reflection material that transmits at least visible light.

(9) Further, the diffuse reflection layer arranges a plurality of kinds of polymer molecules that select and diffusely reflect the light of different predetermined wavelengths.

(10) Further, the directional material recursively reflects reflection light of the light of the predetermined wavelength to the incident direction by an optical laminated body.

(11) Further, the diffuse reflection layer comprises two transparent layers and a concavity that is formed in-between the transparent layers and of a surface portion that reflects the light of the predetermined wavelength and transmits visible light, wherein reflection light of the light of the predetermined wavelength is recursively reflected to the incident direction by reflection of the concavity.

(12) Further, the diffuse reflection layer is formed on the transparent layer, on the dot pattern reading surface side, of the two transparent layers.

(13) Further, the diffuse reflection layer comprises a bead layer that fixes a single transparent bead layer made of glass or resin by resin and a bead reflection layer that is provided in adjacent to the shape of the beads of the bead layer, reflects the light of the predetermined wavelength, and transmits visible light, wherein reflection light of the light of the predetermined wavelength is recursively reflected to the incident direction by reflection of the beads and the bead reflection layer.

(14) Further, dots of the dot pattern are printed with an ink that has a characteristic that absorbs the light of a plurality of kinds of different predetermined wavelengths or a characteristic that absorbs the light of the predetermined wavelengths and a visible light transmission characteristic.

(15) Further, dots are printed with the ink in accordance with a predetermined rule at predetermined positions of the dots where the dot pattern is formed.

(16) Further, the diffuse reflection layer diffusely reflects at least the light of the plurality of kinds of wavelengths, the irradiation means irradiates the light of the plurality of kinds of wavelengths, the filter transmits at least the light of the plurality of kinds of wavelengths and blocks visible light, and the imaging means images at least the light of the plurality of kinds of wavelengths.

(17) Further, a screen that can be projected at least visible light is attached to the opposite surface of the dot pattern reading surface and an image is projected by a projector to the dot pattern forming surface.

(18) Further, the predetermined medium is a printed matter, a display, or a transparent medium.

(19) Further, a protection layer that transmits at least visible light and the light of the predetermined wavelength is formed on the dot pattern reading surface.

(20) Further, the dot pattern is formed on the opposite surface of the dot pattern reading surface of the transparent sheet and the transparent sheet also functions as a protection layer.

(21) Further, coordinate values or coordinate values and a code value are coded in the dot pattern and a position in the dot pattern read by the optical reading device is recognized by the coordinate values.

(22) Further, the information input assistance sheet is classified or uniquely identified by an index that is defined by at least a portion of the coordinate values or the code value read by the optical reading device.

(23) Further, the light of the predetermined wavelength is infrared light or ultraviolet light.

(24) An optical reading device of the present invention reads a dot pattern formed on an information input assistance sheet in or out of contact with the information input assistance sheet that is adhered to or placed on a predetermined medium surface or near the medium surface, the optical reading device comprises: irradiation means that irradiates light of a predetermined wavelength; a filter that transmits at least the light of the predetermined wavelength and blocks visible light; imaging means that images at least the light of the predetermined wavelength; and decoding means that decodes a dot pattern image that is imaged by the imaging means to a dot code, wherein dots of the dot pattern are printed with an ink that has a characteristic that absorbs at least the light of the predetermined wavelength or the characteristic that absorbs the light of the predetermined wavelength and a visible light transmission characteristic.

(25) Further, the optical reading device further comprises transmission means that transmits the decoded dot code or an instruction and/or data that corresponds to the dot code to an information processing device.

(26) Further, the optical reading device further comprises output means that outputs the decoded dot code or information corresponding to an instruction and/or data that corresponds to the dot code.

(27) An information processing system of the present invention comprises: an information input assistance sheet that is adhered to or placed on a predetermined medium surface or near the medium surface; and an optical reading device that reads a dot pattern formed on the information input assistance sheet in or out of contact with the information input assistance sheet, the optical reading device comprising: irradiation means that irradiates light of a predetermined wavelength; a filter that transmits at least the light of the predetermined wavelength and blocks visible light; imaging means that images at least the light of the predetermined wavelength; and decoding means that decodes a dot pattern image that is imaged by the imaging means to a dot code, wherein dots of the dot pattern are printed with an ink that has a characteristic that absorbs at least the light of the predetermined wavelength or the characteristic that absorbs the light of the predetermined wavelength and a visible light transmission characteristic.

(28) Further, the optical reading device further comprises transmission means that transmits the decoded dot code or an instruction and/or data that corresponds to the dot code to an information processing device.

(29) Further, the dot code information processing system further comprises an output device that outputs the decoded dot code or information corresponding to an instruction and/or data that corresponds to the dot code.

INDUSTRIAL APPLICABILITY

The present invention can be utilized as a touch panel, since position information can be acquired by defining at least XY coordinate values in a dot pattern and attaching the dot pattern on a screen of any display, such as a personal computer, a Personal Digital Assistant (PDA), a bank Automated Teller Machine (ATM), and the like. It will be appreciated that if the position of the display image of the display is defined in advance, at least code values may be defined in the corresponding area. Further, even if the dot pattern covers a printed matter that is printed with an ink that absorbs infrared light, only the dot pattern can be read and position information can be acquired, thus, information related to tracing or information of a picture drawn on the printed matter can be output on the screen.

DESCRIPTION OF REFERENCE SIGNS AND NUMERALS

| | |
|---|---|
| 1, 21, 31, 41, 51, 61, 81, 91, 101, 111, 121 | GRID SHEET |
| 2 | PROTECTING TRANSPARENT SHEET |
| 3 | DOT |
| 4, 114, 124 | DOT PATTERN LAYER |
| 5, 25, 35, 45, 55, 65, 85 | INFRARED DIFFUSION LAYER |
| 95, 105 | INFRARED RECURSIVE REFLECTION LAYER |
| 6, 36 | INFRARED REFLECTION LAYER |
| 7 | DOT PATTERN |
| 8 | SUPPORT BODY |
| 9, 19, 29, 79 | POLYMER MOLECULE |
| 10, 20, 30, 70 | CELL |
| 68 | SOLVENT |
| 90, 100 | OPTICAL FUNCTIONAL LAYER |
| 90a | SURFACE LAYER |
| 90b | LIGHT TRANSMISSIVE BODY |
| 92, 102 | CONCAVITY |
| 96a, 96b | INTERMEDIATE LAYER |
| 97a, 97b | TRANSPARENT ADHESIVE LAYER |
| 98a, 98b | TRANSPARENT BASE MATERIAL |
| 103 | BEAD |
| 103a | BEAD REFLECTION LAYER |
| 103b | BEAD LAYER |
| 108 | TRANSPARENT RESIN BINDER MATERIAL |
| 108a | TRANSPARENT RESIN BINDER MATERIAL |
| 108b | TRANSPARENT RESIN BINDER MATERIAL |
| 112 | VIRTUAL GRID POINT |
| 113 | REFERENCE GRID |
| IR, IR1, IR2, IR3, IR4 | INFRARED LIGHT |
| SA, SA1, SA2, SA3, SA4 | SPIRAL AXIS |
| R1, R2 | AVERAGE REFRACTIVE INDEX |
| P1, P2 | SPIRAL PITCH |
| d1 | FILM THICKNESS OF SURFACE LAYER |
| d2 | FILM THICKNESS OF BEAD REFLECTION LAYER |
| $\alpha$ | INCIDENT ANGLE |
| P | REFLECTION ANGLE |
| ■ | REFERENCE GRID POINT DOT |
| □ | KEY DOT |
| ● ○ | INFORMATION DOT |
| a, b, c, d | BLOCK |

**Claims**

1. An information input assistance sheet comprising a diffuse reflection layer that diffusely reflects at least light of a predetermined wavelength and is formed on a dot pattern reading surface, on which is formed a dot pattern that is read in or out of contact by an optical reading device, or an opposite surface of the dot pattern reading surface, the information input assistance sheet being placed on or adhered to a predetermined medium surface or near the medium surface,

   the optical reading device comprising:

       irradiation means that irradiates the light of the predetermined wavelength;
       a filter that transmits at least the light of the predetermined wavelength and blocks visible light;
       imaging means that images at least the light of the predetermined wavelength; and
       decoding means that decodes a dot pattern image that is imaged by the imaging means to a dot code,

   wherein dots of the dot pattern are printed on the dot pattern reading surface with an ink that has a characteristic that absorbs at least the light of the predetermined wavelength or the characteristic that absorbs the light of the predetermined wavelength and a visible light transmission characteristic, and

   the diffuse reflection layer is formed by arranging a directional reflection material so as to diffusely reflect the light of the predetermined wavelength, irradiated from the irradiation means, toward the dot pattern reading surface.

2. The information input assistance sheet according to Claim 1, wherein the directional reflection material is polymer molecules.

3. The information input assistance sheet according to Claim 2, wherein the diffuse reflection layer is formed by arranging a plurality of cells where the polymer molecules are laminated in different directions.

4. The information input assistance sheet according to Claim 2, wherein the diffuse reflection layer is formed by arranging a plurality of cells where the polymer molecules are laminated in the same direction, with varied orientation angles.

5. The information input assistance sheet according to Claim 4, wherein the diffuse reflection layer is formed by arranging the cells with regularly varied orientation angles.

6. The information input assistance sheet according to any one of Claims 3 to 5, wherein the diffuse reflection layer is formed by arranging cells where the polymer molecules are oriented in parallel along the dot pattern reading surface at a predetermined ratio.

7. The information input assistance sheet according to Claim 2, wherein the diffuse reflection layer is formed by enclosing crushed cells in a solvent that has the same refractive index as the cells.

8. The information input assistance sheet according to any one of Claims 1 to 7, wherein the polymer molecules and the cells are made of a directional reflection material that transmits at least visible light.

9. The information input assistance sheet according to any one of Claims 2 to 8, wherein the diffuse reflection layer arranges a plurality of kinds of polymer molecules that select and diffusely reflect the light of different predetermined wavelengths.

10. The information input assistance sheet according to Claim 1, wherein the directional material recursively reflects reflection light of the light of the predetermined wavelength to the incident direction by an optical laminated body.

11. The information input assistance sheet according to Claim 1, wherein the diffuse reflection layer comprises two transparent layers and a concavity that is formed in-between the transparent layers and of a surface portion that reflects the light of the predetermined wavelength and transmits visible light, wherein reflection light of the light of the predetermined wavelength is recursively reflected to the incident direction by reflection of the concavity.

12. The information input assistance sheet according to Claim 11, wherein the diffuse reflection layer is formed on the transparent layer, on the dot pattern reading surface side, of the two transparent layers.

13. The information input assistance sheet according to Claim 1, wherein the diffuse reflection layer comprises a bead layer that fixes a single transparent bead layer made of glass or resin by resin and a bead reflection layer that is provided in adjacent to the shape of the beads of the bead layer, reflects the light of the predetermined wavelength, and transmits visible light, wherein reflection light of the light of the predetermined wavelength is recursively reflected to the incident 58 direction by reflection of the beads and the bead reflection layer.

14. The information input assistance sheet according to any one of Claims 1 to 13, wherein dots of the dot pattern are printed with an ink that has a characteristic that absorbs the light of a plurality of kinds of different predetermined wavelengths or a characteristic that absorbs the light of the predetermined wavelengths and a visible light transmission characteristic.

15. The information input assistance sheet according to Claim 14, wherein dots are printed with the ink in accordance with a predetermined rule at predetermined positions of the dots where the dot pattern is formed.

16. The information input assistance sheet according to either Claim 14 or 15,
wherein the diffuse reflection layer diffusely reflects at least the light of the plurality of kinds of wavelengths,
the irradiation means irradiates the light of the plurality of kinds of wavelengths,
the filter transmits at least the light of the plurality of kinds of wavelengths and blocks visible light, and
the imaging means images at least the light of the plurality of kinds of wavelengths.

17. The information input assistance sheet according to any one of Claims 1 to 16, wherein a screen that can be projected at least visible light is attached to the opposite surface of the dot pattern reading surface and an image is projected by a projector to the dot pattern forming surface.

18. The information input assistance sheet according to any one of Claims 1 to 17, wherein the predetermined medium is a printed matter, a display, or a transparent medium.

19. The information input assistance sheet according to any one of Claims 1 to 18, wherein a protection layer that transmits at least visible light and the light of the predetermined wavelength is formed on the dot pattern reading surface.

20. The information input assistance sheet according to any one of Claims 1 to 19, wherein the dot pattern is formed on the opposite surface of the dot pattern reading surface of the transparent sheet and the transparent sheet also functions as a protection layer.

21. The information input assistance sheet according to any one of Claims 1 to 20, wherein coordinate values or coordinate values and a code value are coded in the dot pattern and a position in the dot pattern read by the optical reading device is recognized by the coordinate values.

22. The information input assistance sheet according to Claim 21, wherein the information input assistance sheet is classified or uniquely identified by an index that is defined by at least a portion of the coordinate values or the code value read by the optical reading device.

23. The information input assistance sheet according to any one of Claims 1 to 22, wherein the light of the predetermined wavelength is infrared light or ultraviolet light.

24. An optical reading device that reads a dot pattern formed on the information input assistance sheet according to any one of Claims 1 to 23 in or out of contact with the information input assistance sheet that is adhered to or placed on a predetermined medium surface or near the medium surface,
the optical reading device comprising:

irradiation means that irradiates light of a predetermined wavelength;
a filter that transmits at least the light of the predetermined wavelength and blocks visible light;
imaging means that images at least the light of the predetermined wavelength; and
decoding means that decodes a dot pattern image that is imaged by the imaging means to a dot code, wherein dots of the dot pattern are printed with an ink that has a characteristic that absorbs at least the light of the predetermined wavelength or the characteristic that absorbs the light of the predetermined wavelength and a visible light transmission characteristic.

25. The optical reading device according to Claim 24 further comprising: transmission means that transmits the decoded dot code or an instruction and/or data that corresponds to the dot code to an information processing device.

26. The optical reading device according to either Claim 24 or 25 further comprising: output means that outputs the decoded dot code or information corresponding to an instruction and/or data that corresponds to the dot code.

27. An information processing system comprising:

the information input assistance sheet according to any one of Claims 1 to 23 that is adhered to or placed on a predetermined medium surface or near the medium surface; and
an optical reading device that reads a dot pattern formed on the information input assistance sheet in or out of contact with the information input assistance sheet,

the optical reading device comprising:

irradiation means that irradiates light of a predetermined wavelength;
a filter that transmits at least the light of the predetermined wavelength and blocks visible light;
imaging means that images at least the light of the predetermined wavelength; and
decoding means that decodes a dot pattern image that is imaged by the imaging means to a dot code,

wherein dots of the dot pattern are printed with an ink that has a characteristic that absorbs at least the light of the predetermined wavelength or the characteristic that absorbs the light of the predetermined wavelength and a visible light transmission characteristic.

28. The dot code information processing system according to Claim 27 wherein the optical reading device further comprises transmission means that transmits the decoded dot code or an instruction and/or data that corresponds to the dot code to an information processing device.

29. The dot code information processing system according to either Claim 27 or 28 further comprising: an output device that outputs the decoded dot code or information corresponding to an instruction and/or data that corresponds to the dot code.

Fig. 1A

# SCANNER

C-MOS SENSOR          IR FILTER

IR-LED          LENS IR-LED
                              IR

DIFFUSER

β

1

α

2

8

8

4

5

6

3          9          7          DISPLAY

Fig. 1B

Fig. 2A

SCANNER

Fig. 2B

Fig. 3

Fig. 4

Fig. 5

Fig. 6A

Fig. 6B

Fig. 7

**41**

IR2     IR1     IR3   IR2 IR3 IR2   IR3     8

10   30     20

45

Fig. 8

Fig. 9

IR-LED

61

IR 8

IR

10

65

8

Fig. 10

Fig. 11

Fig. 12

Fig. 13

Fig. 14

Fig. 15

Fig. 16

Fig. 17

(%)

INFRARED LIGHT OUTPUT CHARACTERISTIC

840 nm

WAVELENGTH

Fig. 18

113

(%)

100

INFRARED ABSORPTION RATE

0

840nm

Fig. 19

(%)

INFRARED LIGHT OUTPUT CHARACTERISTIC

860 nm

WAVELENGTH

Fig. 20

Fig. 21

Fig. 22

Fig. 23

Fig. 24A

Fig. 24B

Fig. 25A

GRID SHEET

SCANNER

IR-LED

C-MOS SENSOR

IR FILTER

LENS

IR-LED

PROTECTING
TRANSPARENT SHEET

DOT PATTERN
LAYER

INFRARED
REFLECTION LAYER

Fig. 25B

Fig. 26A

210

200

230

INFRARED
LIGHT

INFRARED
LIGHT

221 (220)

Fig. 26B

210

200

240

INFRARED
LIGHT

INFRARED
LIGHT

221 (220)

Fig. 26C

200

250

INFRARED
LIGHT

INFRARED
LIGHT

221 (220)

Fig. 27A

Fig. 27B

Fig. 27C

Fig. 28A

Fig. 28B

Fig. 28C

Fig. 29

Fig. 30A

Fig. 30B

| DOT NO. | DOT CENTER VALUE | |
| --- | --- | --- |
| | X COORDINATE VALUE | Y COORDINATE VALUE |
| 1 | $X_1$ | $Y_1$ |
| 2 | $X_2$ | $Y_2$ |
| ⋮ | ⋮ | ⋮ |
| ⋮ | ⋮ | ⋮ |
| $n-1$ | $X_{n-1}$ | $Y_{n-1}$ |
| $n$ | $X_n$ | $Y_n$ |

Fig. 31A

INFORMATION    INFORMATION
    DOT            DOT

VIRTUAL
POINT

Fig. 31B

Fig. 31C

Fig. 31D

Fig. 31E

Fig. 32A

| CODE VALUE |
|---|

Fig. 32B

| X COORDINATE VALUE | Y COORDINATE VALUE |
|---|---|

Fig. 32C

| CODE VALUE | X COORDINATE VALUE | Y COORDINATE VALUE |
|---|---|---|

Fig. 33A

INFORMATION
DOT

REFERENCE
DOT

KEY DOT

Fig. 33B

INFORMATION
DOT

KEY DOT

REFERENCE
DOT

Fig. 33C

KEY DOT

REFERENCE
DOT

INFORMATION
DOT

Fig. 34A

INFORMATION
DOT

REFERENCE
DOT

KEY DOT

Fig. 34B

INFORMATION
DOT

KEY DOT

REFERENCE
DOT

Fig. 34C

KEY DOT

REFERENCE DOT

INFORMATION
DOT

Fig. 35A

REFERENCE DOT

KEY DOT

INFORMATION
DOT

VIRTUAL REGION

VIRTUAL POINT

Fig. 35B

REFERENCE DOT

INFORMATION
DOT

VIRTUAL REGION

VIRTUAL POINT

KEY DOT

Fig. 35C

REFERENCE DOT

INFORMATION
DOT

VIRTUAL REGION

VIRTUAL POINT

KEY DOT

Fig. 36A

Fig. 36B

Fig. 37A

Fig. 37B

Fig. 38

DEFORMATION

CENTER(x0, y0)

CENTER(x0, y0)

$$x_0 = \frac{\displaystyle\sum_{i=1}^{4} x_i}{4}, y_0 = \frac{\displaystyle\sum_{i=1}^{4} y_i}{4}$$

Fig. 39A

INFORMATION
DOT

REFERENCE DOT

Fig. 39B

INFORMATION
DOT

REFERENCE DOT

Fig. 39C

INFORMATION
DOT

REFERENCE DOT

Fig. 40A

INFORMATION
DOT

REFERENCE DOT

Fig. 40B

INFORMATION
DOT

INFORMATION
DOT

REFERENCE DOT

Fig. 41A

INFORMATION DOT (+)

INFORMATION DOT (X)

REFERENCE DOT

Fig. 41B

INFORMATION DOT

REFERENCE DOT

Fig. 42A

REFERENCE DOT

INFORMATION
DOT (+)

INFORMATION
DOT (X)

Fig. 42B

INFORMATION DOT
(+)

REFERENCE DOT

INFORMATION DOT
(X)

Fig. 42C

Fig. 43A

REFERENCE DOT

KEY DOT

INFORMATION
DOT

VIRTUAL REGION

VIRTUAL POINT

Fig. 43B

REFERENCE DOT

INFORMATION
DOT

VIRTUAL REGION

VIRTUAL POINT

REFERENCE DOT
(KEY DOT)

Fig. 43C

REFERENCE DOT

INFORMATION
DOT

VIRTUAL REGION

VIRTUAL POINT

REFERENCE DOT (KEY DOT)

ARBITRARY
READ BLOCK

Fig. 44A

Fig. 44B

L-SHAPED
REFERENCE DOT

ARBITRARY
READ BLOCK

Fig. 45

KEY DOT

REFERENCE
DOT

PARALLEL
MOVEMENT

Fig. 46A

710

700

720

Fig. 46B

DISPLAY

CURSOR

Fig. 46C

720

Fig. 47A

731(730)

710

DISPLAY
SCREEN

Fig. 47B

700

Fig. 47C

731(730)

$(X_1, Y_1)$

740

Fig. 48A

Fig. 48B

MATCH CALIBRATION MARKS
OF PRINTED MATTER AND
SHEET

Fig. 49A

Fig. 49B

*NO CALIBRATION MARK IS PRINTED ON GRID SHEET

Fig. 50A

DISPLAY

GRID SHEET

CALIBRATION MARK

Fig. 50B

GRID SHEET

732

54

55

CALIBRATION MARK

Fig. 51A

DISPLAY

GRID SHEET

CALIBRATION MARK

Fig. 51B

GRID SHEET

732

54

55

CALIBRATION MARK

Fig. 52

| GRID SHEET ID (CODE VALUE) | X COORDINATE VALUE | Y COORDINATE VALUE |
|---|---|---|

Fig. 53A

| X COORDINATE VALUE | Y COORDINATE VALUE |
|---|---|

Fig. 53B

| X COORDINATE | | Y COORDINATE | | GRID SHEET ID |
|---|---|---|---|---|
| MIN VALUE | MAX VALUE | MIN VALUE | MAX VALUE | |
| X1 | X2 | Y1 | Y2 | 1 |
| X2 | X3 | Y2 | Y3 | 2 |
| X3 | X4 | Y3 | Y4 | 3 |
| X4 | X5 | Y4 | Y5 | 4 |

Fig. 54

| CALIBRATION PARAMETER (CODE VALUE) | X COORDINATE VALUE | Y COORDINATE VALUE |
|---|---|---|

Fig. 55A

| X COORDINATE VALUE | Y COORDINATE VALUE |
|---|---|

Fig. 55B

| XCOORDINATE | | YCOORDINATE | | CALIBRATION PARAMETER |
|---|---|---|---|---|
| MIN VALUE | MAX VALUE | MIN VALUE | MAX VALUE | |
| X1 | X2 | Y1 | Y2 | 1 |
| X2 | X3 | Y2 | Y3 | 2 |
| X3 | X4 | Y3 | Y4 | 3 |
| X4 | X5 | Y4 | Y5 | 4 |

## INTERNATIONAL SEARCH REPORT

| International application No. |
|---|
| PCT/JP2015/050072 |

| A. CLASSIFICATION OF SUBJECT MATTER |
|---|
| *G06F3/041(2006.01)i* |

According to International Patent Classification (IPC) or to both national classification and IPC

| B. FIELDS SEARCHED |
|---|
| Minimum documentation searched (classification system followed by classification symbols) |
| G06F3/041, G06F3/033, G06F3/048, G02B5/02 |

| Documentation searched other than minimum documentation to the extent that such documents are included in the fields searched |
|---|
| Jitsuyo Shinan Koho          1922–1996   Jitsuyo Shinan Toroku Koho   1996–2015 |
| Kokai Jitsuyo Shinan Koho    1971–2015   Toroku Jitsuyo Shinan Koho   1994–2015 |

| Electronic data base consulted during the international search (name of data base and, where practicable, search terms used) |
|---|
|  |

### C. DOCUMENTS CONSIDERED TO BE RELEVANT

| Category* | Citation of document, with indication, where appropriate, of the relevant passages | Relevant to claim No. |
|---|---|---|
| X<br>Y<br><br>A | JP 2008-209598 A  (Dainippon Printing Co., Ltd.),<br>11 September 2008 (11.09.2008),<br>paragraphs [0007], [0010], [0015], [0029], [0045], [0047], [0049], [0053], [0057]; fig. 2<br>(Family: none) | 1-3,10,13<br>7-9,11-12,<br>14-29<br>4-6 |
| Y | JP 2006-15498 A  (Konica Minolta Photo Imaging, Inc.),<br>19 January 2006 (19.01.2006),<br>paragraph [0048]<br>(Family: none) | 7-9,14-29 |
| Y | JP 2005-99158 A  (Dainippon Printing Co., Ltd.),<br>14 April 2005 (14.04.2005),<br>paragraphs [0027] to [0028], [0031], [0063]<br>(Family: none) | 7-9,14-29 |

☒  Further documents are listed in the continuation of Box C.      ☐  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered    to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 22 January 2015 (22.01.15) | 03 February 2015 (03.02.15) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (July 2009)

**INTERNATIONAL SEARCH REPORT**

| International application No. |
| --- |
| PCT/JP2015/050072 |

C (Continuation).  DOCUMENTS CONSIDERED TO BE RELEVANT

| Category* | Citation of document, with indication, where appropriate, of the relevant passages | Relevant to claim No. |
| --- | --- | --- |
| Y | JP 2001-243006 A  (Ricoh Elemex Corp.),<br>07 September 2001 (07.09.2001),<br>paragraph [0038]<br>(Family: none) | 9,14-29 |
| Y | JP 2011-212892 A  (Sony Corp.),<br>27 October 2011 (27.10.2011),<br>paragraph [0056]; fig. 4<br>& US 2011/0256350 A1 | 11-12,14-29 |
| Y | JP 2008-154211 A  (Kenji YOSHIDA),<br>03 July 2008 (03.07.2008),<br>paragraphs [0264] to [0266]; fig. 71 to 72<br>& US 2009/0091530 A1    & EP 2026177 A1<br>& WO 2007/105819 A1    & KR 10-2008-0102281 A<br>& CN 101401059 A | 17-29 |

Form PCT/ISA/210 (continuation of second sheet) (July 2009)

**EP 3 089 003 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003256137 A
- JP 4129841 B

- JP 2005037735 A